# EUROPEAN PATENT APPLICATION

(11) **EP 4 290 624 A1**
(43) Date of publication of application: **13.12.2023**
(21) Application number: 21924723.6
(22) Date of filing: 08.02.2021
(51) Int. Cl.: H01M 8/0258, H01M 8/10

(54) **GAS DIFFUSION LAYER, SEPARATOR AND ELECTROCHEMICAL REACTOR**

(71) Applicant: Enomoto Co., Ltd., Uenohara-shi, Yamanashi 409-0198 (JP); University of Yamanashi, Kofu-shi, Yamanashi 400-8510 (JP)
(72) Inventor: YANAI, Hiroshi, Uenohara-shi, Yamanashi 409-0198 (JP); NASU, Mitsunori, Uenohara-shi, Yamanashi 409-0198 (JP); WATANABE, Masahiro, Kofu-shi, Yamanashi 400-8510 (JP)
(74) Representative: Liesegang, Eva
(86) International application number: PCT/JP2021/004686
(87) International publication number: WO 2022/168333

(57) **Abstract**

There is provided a fuel cell gas supply diffusion layer 42A that includes: a sheet-shaped porous body layer 40 having conductivity, the porous body layer 40 allowing permeation and diffusion of a gas therethrough; and a plurality of gas flow path grooves formed on one surface of the porous body layer 40 in a direction respectively directed from a gas inflow side to a gas outflow side. In the fuel cell gas supply diffusion layer 42A, the plurality of gas flow path grooves include: a plurality of gas inflow side grooves 53A, 53B formed on the gas inflow side; and a plurality of gas outflow side grooves 54A, 54B formed on the gas outflow side. The plurality of gas inflow side grooves 53A, 53B include two or more kinds of gas inflow side grooves 53A, 53B that have different lengths. According to the present invention, it is possible to provide the fuel cell gas supply diffusion layer 42A capable of increasing reaction efficiency (power generation efficiency) than the prior art.

## Description

### Technical Field

The present invention relates to a gas diffusion layer, a separator, and an electrochemical reactor (an electrochemical reaction device).

### Background Art

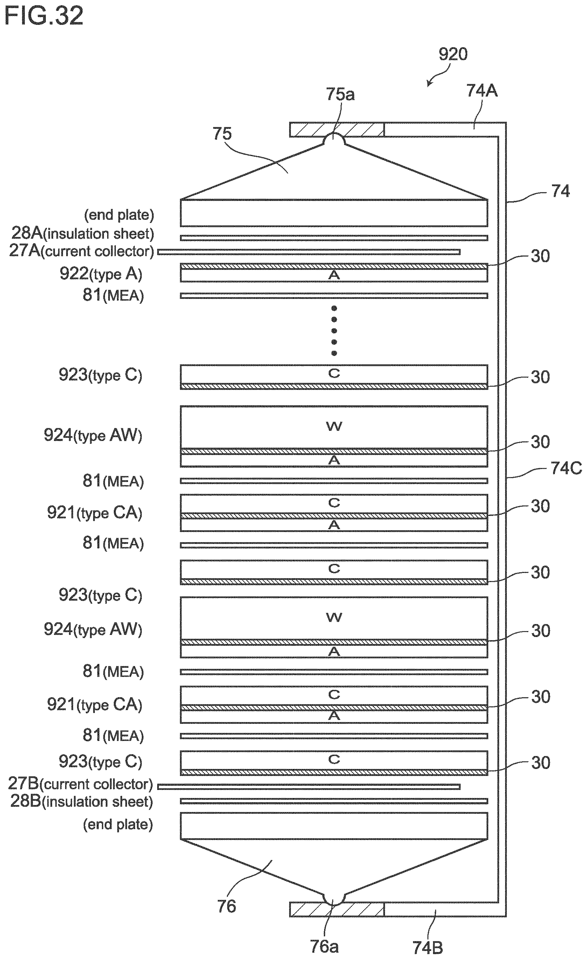

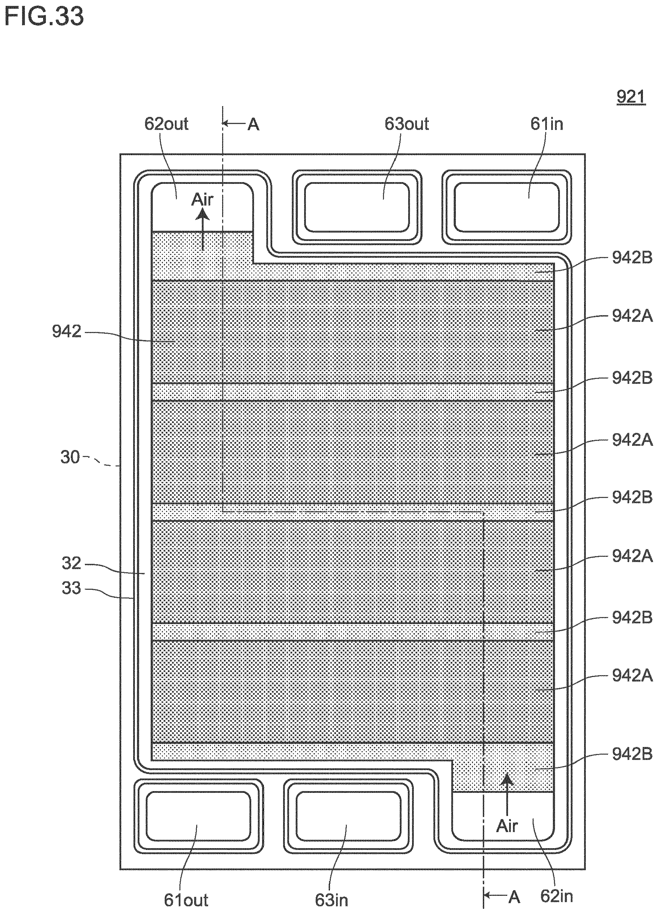

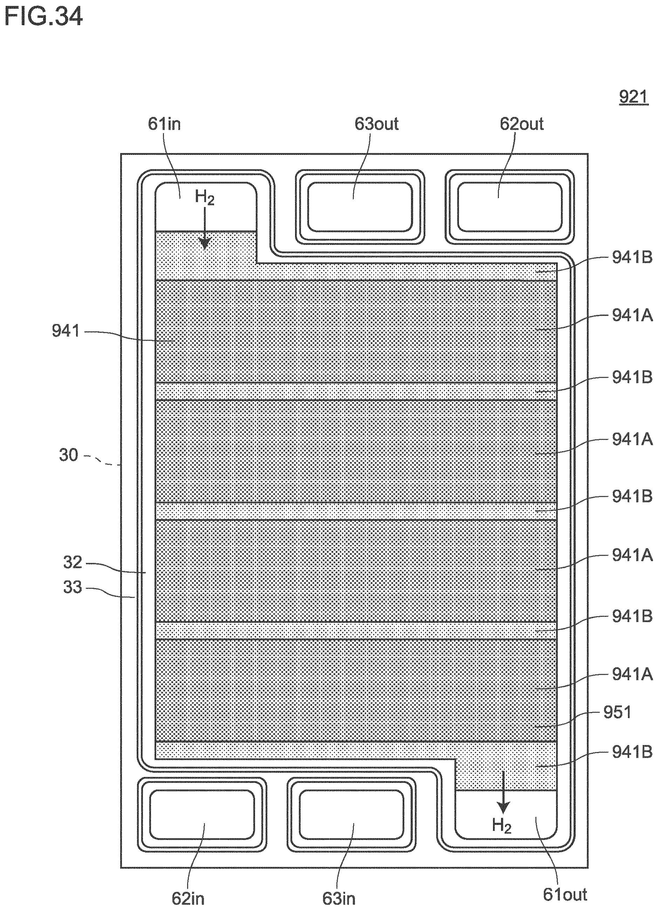

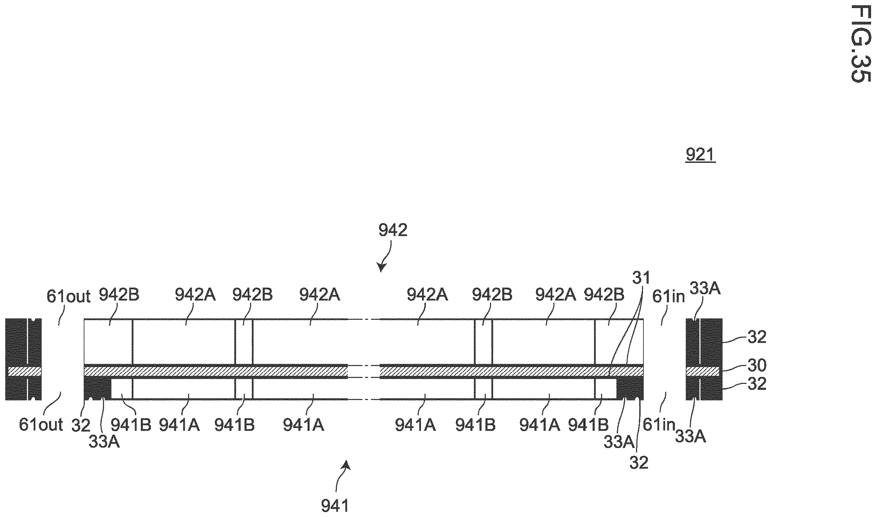

In the technical field of a polymer electrolyte fuel cell (PEFC), there has been known a fuel cell stack capable of uniformly supplying and defusing a fuel cell gas (an anode gas, a cathode gas) (for example, see patent literature 1). Fig. 32 is a front view schematically illustrating a conventional fuel cell stack 920. Fig. 33 and Fig. 34 are plan views of a separator 921 of a type CA in the conventional fuel cell stack 920. Out of these drawings, Fig. 33 is a plan view as viewed from a fuel cell gas supply diffusion layer (cathode gas supply diffusion layer) 942 side, Fig. 34 is a plan view as viewed from a fuel cell gas supply diffusion layer (anode gas supply diffusion layer )941 side. Fig. 35 is a cross-sectional view taken along a line A-A in Fig. 33.

The conventional fuel cell stack 920 has, as described in Fig. 32 to Fig. 35, the structure where a plurality of separators (a separator 921 of a type CA, a separator 922 of a type A, a separator 923 of a type C, a separator 924 of a type AW) are stacked, wherein each separator has the structure where a fuel cell gas supply diffusion layer formed of a porous material layer is mounted on at least one of surfaces of a metal plate 30. The symbol "A" in the separator 921 of a type CA, the separator 922 of a type A, and the separator 924 of a type AW indicates a fuel cell gas supply diffusion layer (anode gas supply diffusion layer) 941. The symbol "C" in the separator 921 of a type CA, and the separator 923 of a type C indicates a fuel cell gas supply diffusion layer (cathode gas supply diffusion layer) 942. The symbol "W" in the separator 924 of a type AW indicates a cooling water supply diffusion layer. According to the conventional fuel cell stack 920, the fuel cell gas supply diffusion layers 941, 942 formed of a porous material layer are formed on the separator itself and hence, a fuel cell gas can be uniformly diffused over the entire surface of the fuel cell gas supply diffusion layer. As a result, a fuel cell gas can be supplied uniformly to the entire surface of a membrane electrode assembly (MEA) 81 and hence, the power generation efficiency of the fuel cell can be increased compared to the prior art.

In the field of the electrochemistry, the generation of power using a chemical reaction of gases and an electrolysis are two sides of the same coin. As described above, it is considered that the fuel cell gas supply diffusion layer, the separator and the fuel cell stack can be converted into an electrolysis (the generation of a cathode gas and an anode gas) by using water in place of a gas while substantially maintaining the same configuration. Further, the fuel cell gas supply diffusion layer, the separator and the fuel cell stack can be converted into a methanol fuel cell (a methanol aqueous solution anode, an air cathode), a lithium ion-air cell (air cathode) or a redox flow cell (anode and cathode for supplying vanadium ion aqueous solution) that uses a liquid that is a fluid in the same manner as a gas in place of a gas while maintaining the same configuration. Accordingly, in this specification, as the expression that includes "fuel cell gas supply diffusion layer" (expression irrelevant to fuel cell use and electrolysis use), "gas diffusion layer" is used. As the expression that includes "fuel cell stack", "electrochemical reactor" is used. The "gas diffusion layer" roughly means the "layer mainly provided for diffusing a gas", and includes a layer that allows the diffusion or the communication of a substance other than a gas (particularly, a liquid such as water) in the layer.

### Citation List

### Patent Literature

Patent Literature 1: WO2015/072584

### Summary of Invention

### Technical Problem

By the way, in the technical field of electro chemistry, there has been a request for a technique that can increase reaction efficiency (power generation efficiency in case of a fuel cell) compared to the prior art. In view of such circumstances, it is an object of the present invention to provide a gas diffusion layer, a separator and an electrochemical reactor that can exhibit high reaction efficiency compared to the prior art.

### Solution to problem

A gas diffusion layer according to an aspect of the present invention is a gas diffusion layer that includes: a sheet-shaped porous body layer having conductivity, the porous body layer allowing permeation and diffusion of a gas therethrough; and a plurality of gas flow path grooves formed on one surface of the porous body layer in a direction directed from a gas inflow side to a gas outflow side, wherein the plurality of gas flow path grooves includes: a plurality of gas inflow side grooves formed on the gas inflow side and a plurality of gas outflow side grooves formed on the gas outflow side, and the plurality of gas inflow side grooves include two or more kinds of gas inflow side grooves that have different lengths.

A separator according to one aspect of the present invention is a separator that includes: a gas shied plate; and a gas diffusion layer disposed on at least one surface of the gas shield plate, wherein the gas diffusion layer is the gas diffusion layer of the present invention, is disposed with respect to the gas shield plate such that the plurality of gas flow path grooves are positioned on a gas shield plate side, and a gas flow path is formed by the gas flow path groove and the gas shield plate.

An electrochemical reactor according to one aspect of the present invention is an electrochemical reactor formed by stacking a separator and a membrane electrode assembly, wherein the separator is a separator according to the present invention, and the separator and the membrane electrode assembly are stacked with a positional relationship where the membrane electrode assembly is positioned on a surface of the gas diffusion layer on a side where the plurality of gas flow path grooves are not formed.

### Advantageous Effects of Invention

According to the present invention, it is possible to provide a gas diffusion layer, a separator and an electrochemical reactor that can increase reaction efficiency compared to the prior art.

### Brief Description of Drawings

Fig. 1 is a front view schematically illustrating a fuel cell stack 20 according to an embodiment 1.
Fig. 2 is a side view schematically illustrating the fuel cell stack 20 according to the embodiment 1.
Fig. 3 is a view for describing a membrane electrode assembly (MEA) 81.
Fig. 4 is a plan view of a fuel cell separator 23A according to the embodiment 1.
Fig. 5 is a cross-sectional view of the fuel cell separator 23A according to the embodiment 1.
Fig. 6 is a view for describing gas inflow side grooves 53a, 53b, and gas outflow side grooves 54a, 54b in a fuel cell gas supply diffusion layer 42A according to the embodiment 1.
Fig 7 is a view for describing a relay grooves 55a to 55d and communication grooves 56a, 56b in the fuel cell gas supply diffusion layer 42A according to the embodiment 1.
Fig. 8 is a cross-sectional view of separators (fuel cell separators 21, 22, 24, 25) other than the fuel cell separator 23A according to the embodiment 1.
Fig. 9 is a plan view of a fuel cell separator 23B according to an embodiment 2.
Fig. 10 is a view for describing gas inflow side grooves 53c to 53f and gas outflow side grooves 54c to 54f in a fuel cell gas supply diffusion layer 42B according to the embodiment 2.
Fig. 11 is a view for describing a relay groove 55e and a communication groove 56c in the fuel cell gas supply diffusion layer 42B according to the embodiment 2.
Fig. 12 is a plan view of a fuel cell separator 23C according to an embodiment 3.
Fig. 13 is a view for describing gas inflow side grooves 53g to 53j and gas outflow side grooves 54g to 54j in a fuel cell gas supply diffusion layer 42C according to the embodiment 3.
Fig. 14 is a view for describing relay grooves 55d to 55j and communication grooves 56d, 56e in the fuel cell gas supply diffusion layer 42C according to the embodiment 3.
Fig. 15 is a plan view of a fuel cell separator 23D according to an embodiment 4.
Fig. 16 is a view for describing gas inflow side grooves 53k to 53n and gas outflow side grooves 54k, 54l in a fuel cell gas supply diffusion layer 42D according to the embodiment 4.
Fig. 17 is a view for describing relay grooves 55k to 55p in the fuel cell gas supply diffusion layer 42D according to the embodiment 4.
Fig. 18 is a plan view of a fuel cell separator 23E according to an embodiment 5.
Fig. 19 is a plan view of a fuel cell separator 23F according to an embodiment 6.
Fig. 20 is a plan view of a fuel cell separator 23G according to an embodiment 7.
Fig. 21 is a plan view of a fuel cell separator 23H according to an embodiment 8.
Fig. 22 is a plan view of a fuel cell separator 231 according to a comparison example.
Fig. 23 is a plan view of a fuel cell separator 22A for an anode gas used in test examples.
Fig. 24 is a view for describing the division of regions in the measurement of the current density distribution in a test example 3.
Fig. 25 is a graph illustrating a result of a test example 1 (a relationship between a pattern of gas flow path grooves and a power generation characteristic).
Fig. 26 is a graph illustrating a result of a test example 2 (a relationship between a pattern of gas flow path grooves and a pressure loss in a fuel cell gas supply diffusion layer).
Fig. 27 is a graph illustrating a result of a test example 3 (a relationship between a pattern of gas flow path grooves and the current density distribution in the fuel cell gas supply diffusion layer).
Fig. 28 is a plan view of a fuel cell separator 23J according to a modification 1.
Fig. 29 is a plan view of a fuel cell separator 23K according to a modification 2.
Fig. 30 is a plan view of a fuel cell separator 23L according to a modification 3.
Fig. 31 is a plan view of a fuel cell separator 23M according to a modification 4.
Fig. 32 is a front view schematically illustrating a conventional fuel cell stack 920.
Fig. 33 is a plan view of a fuel cell separator 921 of a type CAin the conventional fuel cell stack 920.
Fig. 34 is a plan view of the fuel cell separator 921 of a type CA in the conventional fuel cell stack 920.
Fig. 35 is a cross-sectional view taken along a line A-A in Fig. 33.

### [Description of embodiments]

Hereinafter, a gas diffusion layer, a separator and an electrochemical reactor according to the present invention are described in detail with reference to embodiments illustrated in the drawings.

### (Embodiment 1)

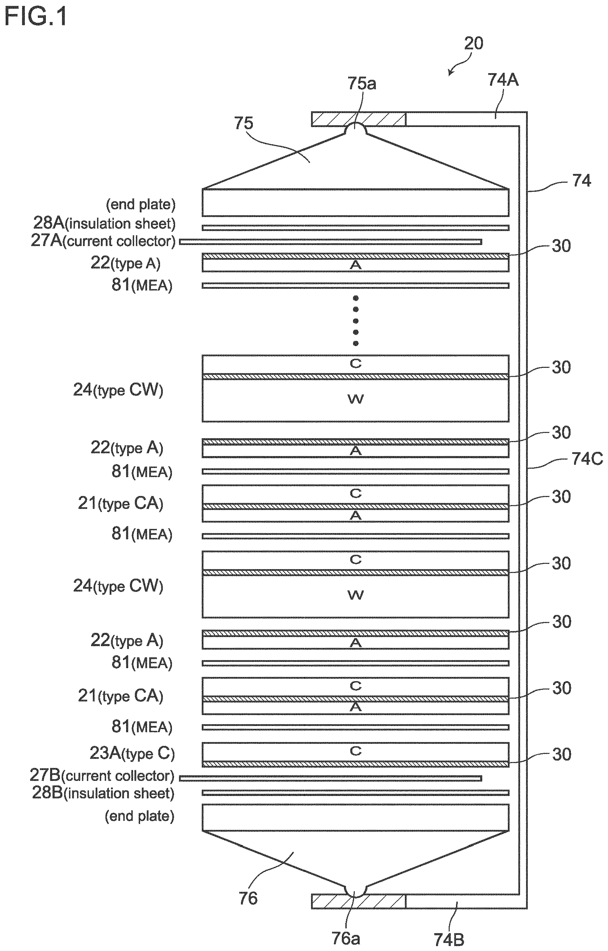

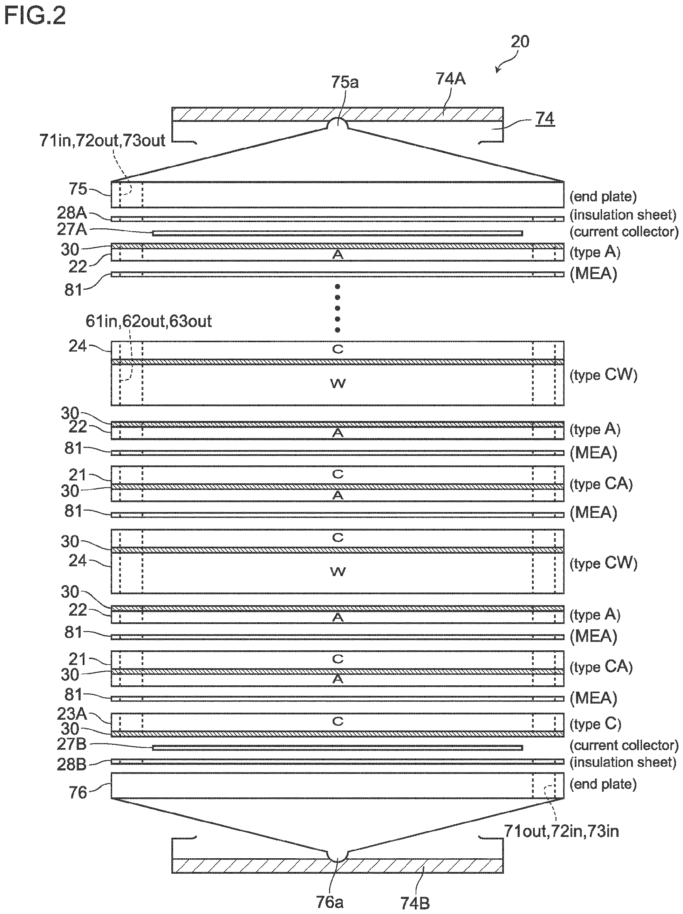

Fig. 1 is a front view schematically illustrating a fuel cell stack 20 (electrochemical reactor) according to an embodiment 1. Fig. 2 is a side view schematically illustrating the fuel cell stack 20 according to the embodiment 1.

The fuel cell stack 20 (electrochemical reactor) according to an embodiment 1 is a fuel cell stack formed by stacking fuel cell separators 21, 22, 23A, 24 (separators) and membrane electrode assemblies 81. To further describe the configuration, the fuel cell stack 20 is a solid polymer fuel cell (PEFC: Polymer Electrolyte Fuel Cell). The fuel cell stack 20 includes a plurality of single cells. Each cell of the fuel cell stack 20 includes: the membrane electrode assembly 81; and an element that forms a cathode side and an element that forms an anode side in a state where these elements sandwich the membrane electrode assembly 81 therebetween.

In the fuel cell separator 21 (the separator of a type CA), a cathode gas supply diffusion layer C is formed on one surface of a metal plate 30 (gas shielding plate), and an anode gas supply diffusion layer A is formed on the other surface of the metal plate 30. In the fuel cell separator 22 (the separator of a type A), an anode gas supply diffusion layer A is formed on one surface of a metal plate 30. In the fuel cell separator 23A (the separator of a type C), a cathode gas supply diffusion layer C is formed on one surface of a metal plate 30. In the fuel cell separator 24 (the separator of a type CW), a cathode gas supply diffusion layer C is formed on one surface of the metal plate 30, and a cooling water supply diffusion layer W is formed on the other surface.

The respective cells are arranged such that a cathode side and an anode side appear alternately. The cathode gas supply diffusion layer C and the anode gas supply diffusion layer A are disposed on sides opposite to each other with the membrane electrode assembly (MEA) 81 sandwiched therebetween. In the embodiment, the cooling water supply diffusion layer W for supplying cooling water is provided each time two single cells are arranged. The cooling water supply diffusion layer W may be disposed every one single cell, or may be disposed every three or more single cells. The fuel cell separators 21, 22, 23A, 24 are stacked in a combined manner such that the metal plate 30 (preferably the metal plate 30 of the separator of a type A or the separator of a type C) faces the cooling water supply diffusion layer W.

Although not illustrated in Fig. 1 and Fig. 2, the fuel cell stack may include a separator (the separator of a type AW) where the anode gas supply diffusion layer A is formed on one surface of the metal plate 30 and the cooling water supply diffusion layer W is formed on the other surface of the metal plate 30. Further, the fuel cell stack may include a separator (the separator of a type W) where the cooling water supply diffusion layer W is formed on one surface of the metal plate 30. Further, the fuel cell stack may include a separator where the cooling water supply diffusion layer W is formed on each of both surfaces of the metal plate 30. The detail of the configurations of the respective separators is described later.

Current collectors 27A, 27B are disposed on both end portions of the stacked cells. Further, outside the current collectors 27A, 27B, end plates 75, 76 are disposed by way of insulation sheets 28A, 28B. The fuel cell separators 21, 22, 23A, 24, are pressed from both sides by the end plates 75, 76. With respect to the separators that are positioned on both ends of the fuel cell stack 20 and are brought into contact with the current collectors 27A, 27B, it is preferable that the metal plates 30 (corrosion layers) of the separators be directed outward.

In Fig. 1 and Fig. 2, to facilitate the understanding of the configuration, the fuel cell separators 21, 22, 23A, 24, the membrane electrode assembly 81, the current collectors 27A, 27B, the insulation sheets 28A, 28B and the end plates 75, 76 are depicted in a spaced-apart manner. However, these members are hermetically joined to each other in the order of the illustrated arrangement. The joining method is not particularly limited. For example, these members may be joined to each other by only pressing the respective members from both sides by the end plates 75, 76. Alternatively, the members may be joined to each other such that respective members are made to adhere to each other by an adhesive at suitable positions and, thereafter, the respective members are pressed to each other from both sides by the end plates 75, 76. The members may be joined to each other by other methods. The respective fuel cell separators 21, 22, 23A, 24, the membrane electrode assembly 81, the current collectors 27A, 27B, the insulation sheets 28A, 28B and the like have thicknesses ranging from approximately 100 µm to approximately 10 mm, for example. In the respective drawings describing the respective embodiments in the present specification, the thicknesses of the members are depicted in an exaggerating manner.

On one end portion of the end plate 75 on an anode side, an anode gas supply port 71in, a cathode gas discharge port 72out and a cooling water discharge port 73out are respectively formed. On the other hand, on one end portion of the end plate 76 on a cathode side (a side opposite to the above-mentioned one end portion of the end plate 75), an anode gas discharge port 71out, a cathode gas supply port 72in, and a cooling water supply port 73in (in Fig. 2, these ports being indicated by a broken line in a collective manner) are mounted. These respective supply ports and the respective discharge ports are connected to supply pipes and discharge pipes of fluids corresponding to the respective supply ports and the respective discharge ports.

The fuel cell separators 21, 22, 23A, and 24 each include: an anode gas inlet port 61in that communicates with the anode gas supply port 71in; a cathode gas (and generated water) outlet port 62out that communicates with the cathode gas discharge port 72out, and a cooling water outlet port 63out that communicates with the cooling water discharge port 73out. Further, the fuel cell separators 21, 22, 23A, and 24 each include: an anode gas outlet port 61out that communicates with the anode gas discharge port 71out; a cathode gas inlet port 62in that communicates with the cathode gas supply port 72in, and a cooling water inlet port 63in that communicates with a cooling water supply port 73in.

A cathode gas, an anode gas, and cooling water are supplied through the anode gas supply port 71in, the cathode gas supply port 72in and the cooling water supply port 73in. In the embodiment 1, the case is exemplified where a hydrogen gas is used as an anode gas, and air is used as a cathode gas.

Next, the membrane electrode assembly 81 is described.

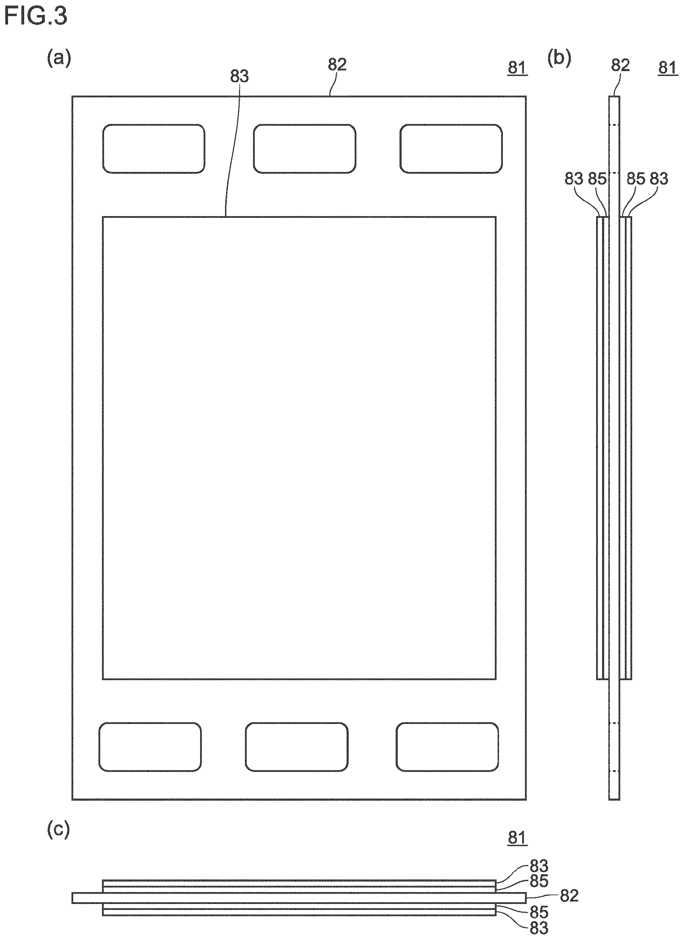

Fig. 3 is a view for describing the membrane electrode assembly (MEA) 81. Fig. 3 (a) is a plan view of the membrane electrode assembly 81, Fig. 3 (b) is a front view of the membrane electrode assembly 81, and Fig.3 (c) is a side view of the membrane electrode assembly.

As shown in Fig. 3, the membrane electrode assembly 81 includes: an electrolyte membrane (PEM) 82; a catalyst layers (CL) 85 that are disposed on both surfaces of the electrolyte membrane 82 respectively; and micro porous layers (MPL) 83 that are disposed on outer-side surfaces of the respective catalyst layers 85. In this specification, a component that is constituted of the electrolyte membrane 82 and the catalyst layers 85 disposed on both sides of the electrolyte membrane 82 is referred to as a catalyst coated membrane (CCM). The micro porous layer 83 has pores (fine holes) having a diameter finer than pores of the porous layer 40. The micro porous layers 83 may be omitted. Further, as described later with reference to a modification 7, in a case where the direct applying of the micro porous layers 83 to the catalyst layer 85 is omitted, the micro porous layers 83 may be applied to surfaces of the fuel cell gas supply diffusion layers 41, 42A that are brought into contact with the catalyst layer 85.

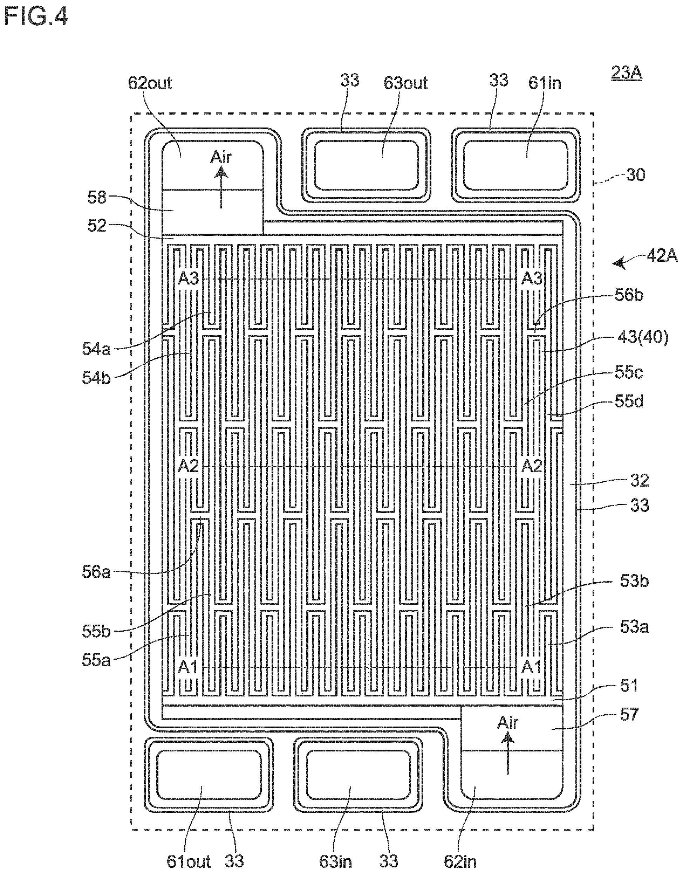

Next, the fuel cell gas supply diffusion layer 42A (gas supply diffusion layer) is described by taking the fuel cell separator 23A as an example. Fig. 4 is a plan view of the fuel cell separator 23A.

Although Fig. 4 is a plan view of the fuel cell separator 23A of a type C as viewed from a side of the metal plate 30, the illustration of metal plate 30 is omitted for facilitating the understanding of the arrangement of a plurality of gas flow path grooves in the fuel cell separator 23A. In the plan views of the separator including Fig. 4, to avoid a situation that the indication of symbols becomes complicated, with respect to the gas flow path grooves (gas inflow side grooves, gas outflow side grooves, and relay grooves), even in a case where a plurality of grooves having the same shape exist, in principle, only one arbitrary groove is indicated by a symbol.

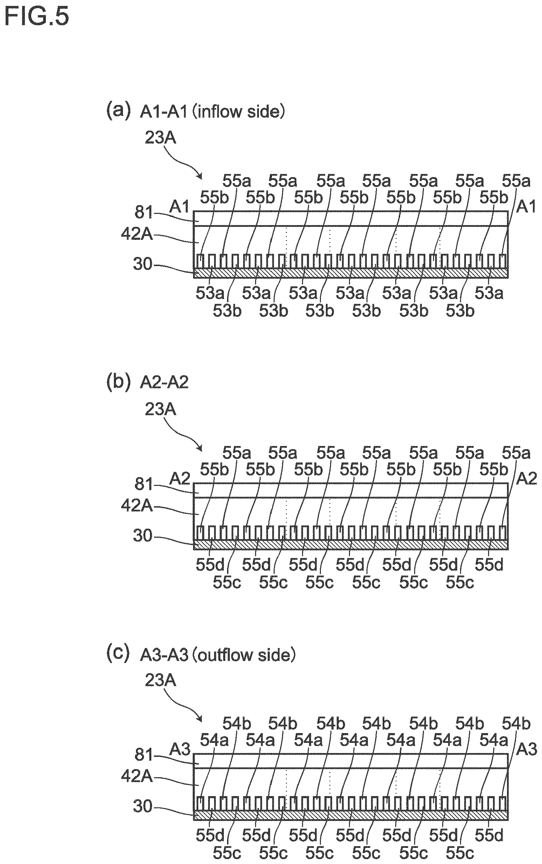

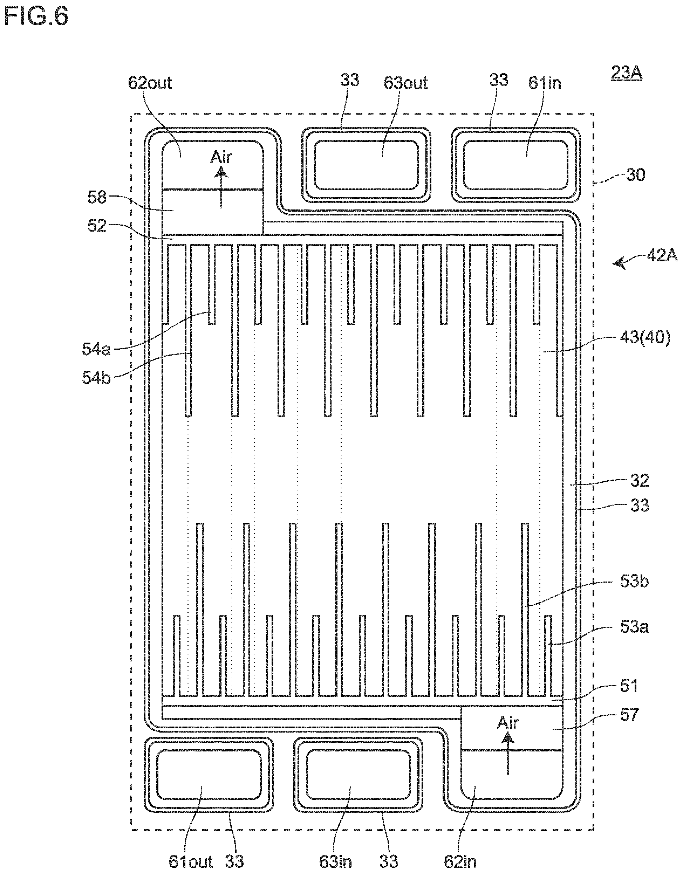

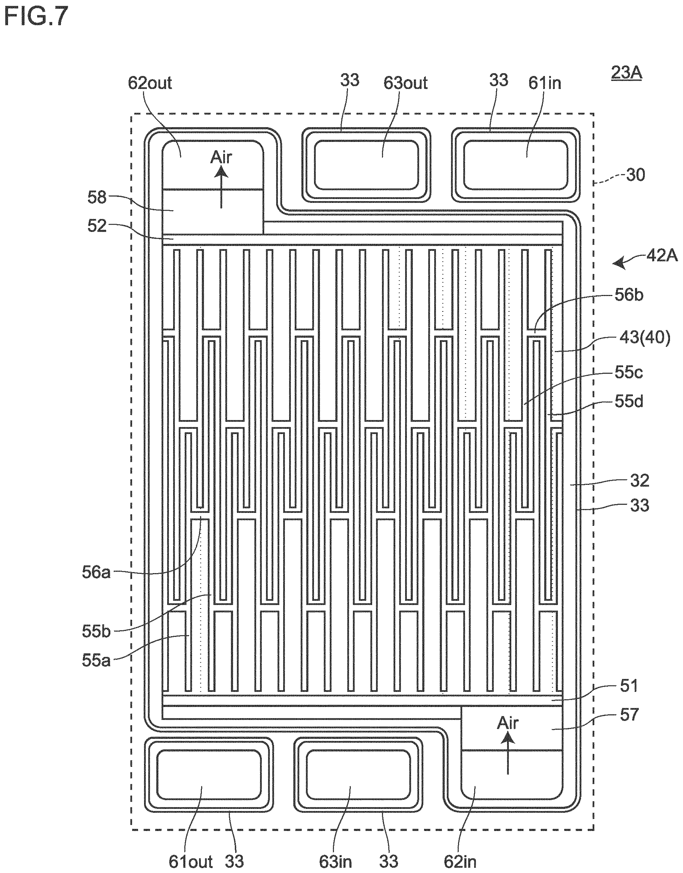

Fig. 5 is a cross-sectional view of the fuel cell separator 23A according to the embodiment 1. Fig. 5 (a) is a cross-sectional view taken along a line A1-A1 in Fig. 4, Fig. 5 (b) is a cross-sectional view taken along a line A2-A2 in Fig. 4, and Fig. 5 (c) is a cross-sectional view taken along a line A3-A3 in Fig. 4. In Fig. 5, to indicate the positional relationship between the fuel cell separator 23A and the membrane electrode assembly 81, the fuel cell separator 23A in a state where the membrane electrode assembly 81 is joined to the fuel cell separator 23A is illustrated. The illustration of the cross-sectional structure of the membrane electrode assembly 81 is omitted. Fig. 6 is a view for describing the gas inflow side grooves 53a, 53b and the gas outflow side grooves 54, 54b in the fuel cell separator 23A according to the embodiment 1. Fig. 7 is a view for describing relay grooves 55a to 55d and communication grooves 56a, 56b in the fuel cell separator 23A in the embodiment 1. To facilitate the understanding of the arrangement of the grooves, the illustration of the relay grooves 55a to 55d and the communication grooves 56a, 56b is omitted in Fig. 6, and the illustration of the gas inflow side grooves 53a, 53b, and the gas outflow side grooves 54a, 54b is omitted in Fig. 7.

As illustrated in Fig. 4 and Fig. 5, the fuel cell separator 23A is a separator that includes: the metal plate 30 that constitutes a gas shield plate; and the fuel cell gas supply diffusion layer 42A that is disposed on at least one surface of the metal plate 30. In Fig. 5, hutching that indicates a cross section is applied to the metal plate 30. It is preferable that the metal plate 30 be made of one or more metals selected from a group consisting of Inconel, nickel, gold, silver, and platinum, an austenite stainless steel plate with metal plating or a clad material. The corrosion of the metal plate 30 can be enhanced by using these metals.

In the fuel cell separator 23A, at one end portion (a lower portion In Fig. 4) of the metal plate 30 in a longitudinal direction, the cathode gas inlet port 62in, the cooling water inlet port 63in, and the anode gas outlet port 61out are disposed in the order of the right, the center and the left in Fig. 4. Further, on the other end portion (an upper portion in Fig. 4), the cathode gas outlet port 62out, the cooling water outlet port 63out, and the anode gas inlet port 61in are disposed in the order of the left, the center, and the right in Fig. 4.

A periphery of each of respective regions where the respective inlet ports 61in, 62in, 63in, the respective outlet ports 61out, 62out, 63out, and the fuel cell gas supply diffusion layer 42A are formed is surrounded by a dense frame 32 having electron conductivity or non-electron conductivity. The dense frame 32 prevents a leakage of an anode gas, a cathode gas, and cooling water. On an outer surface of the dense frame 32, a groove is formed along the dense frame 32 such that the groove surrounds a region where the respective inlet ports 61in, 62in, 63in, the respective outlet ports 61out, 62out, 63out, and the fuel cell gas supply diffusion layer 42A are formed (not illustrated in the drawing). A gasket (a seal member such as a packing, or an O ring) 33 is disposed in this groove.

On both surfaces of the metal plate 30, except for portions where the respective inlet ports 61in, 62in, 63in and the respective outlet ports 61out, 62out, and 63out are formed as described above, a corrosion layer having electron conductivity (not illustrated in Fig. 5) is formed on the entire surface of the metal plate 30. A corrosion layer may be formed on inner peripheral surface of the respective inlet ports 61in, 62in, 63in and the respective outlet ports 61out, 62out, 63out. A corrosion layer may be formed on side surfaces and end surfaces of the metal plate 30. The corrosion layer is preferably a dense layer having the same composition as the dense frame 32, and has an action of suppressing the corrosion of the metal plate 30. At a stage where the fuel cell stack 20 illustrated in Fig. 1 or Fig. 2 is constituted by combining the separators, the gasket 33 is hermetically brought into contact with other separators, membrane electrode assemblies 81 or current collectors 27A,27B to which the gasket 33 is joined thus suppressing a leakage of a fluid.

The fuel cell separator 23A is a separator of a type C. As illustrated in Fig. 4 to Fig. 7, the fuel cell gas supply diffusion layer 42A that supplies and diffuses a cathode gas is disposed at a center portion of one surface of the rectangular metal plate 30 that constitutes a substrate. That is, the fuel cell gas supply diffusion layer 42A is a fuel cell gas supply diffusion layer for a cathode gas. The fuel cell gas supply diffusion layer 42A includes: a sheet-shaped porous body layer 40 capable of transmitting and diffusing a gas and having conductivity; and a plurality of gas flow path grooves formed on one surface of the porous body layer 40 in a state where the plurality of gas flow path grooves respectively extend from an inflow side to an outflow side of a gas (a cathode gas in the fuel cell separator 23A). The plurality of gas flow path grooves are arranged with respect to the metal plate 30 (a gas shield plate) such that the plurality of the gas flow path grooves are positioned on a metal plate 30 (gas shield plate) side, and gas flow paths are formed by the gas flow path grooves and the metal plate 30 (the gas shield plate). The fuel cell separator 23A and the membrane electrode assembly 81 are stacked to each other with the positional relationship where the membrane electrode assembly 81 is positioned on a surface of the fuel cell gas supply diffusion layer 42A on a side where the plurality of gas flow path grooves are not formed (see Fig. 5). "The gas flow path grooves" and "gas flow paths" are not exclusively used with respect to a gas, and "the gas flow path grooves" and "gas flow paths" may be also used for allowing the flow of a substance other than a gas (particularly a liquid such as water).

In this specification, "from the inflow side to the outflow side of the gas" means "substantially along the direction that the gas flows", and the direction that "a gas flows from the inflow side to the outflow side" is the direction that a gas in the porous body layer 40 flows in a case where the porous body layer 40 is viewed as a whole. This means that, in the case where the cathode gas inlet port 62in and the cathode gas outlet port 62out are arranged at positions on a diagonal line of the metal plate 30 like the fuel cell gas supply diffusion layer 42A according to the embodiment 1, it is unnecessary that gas flow paths are formed along the above-mentioned diagonal line. That is, as described in the embodiment 1 with respect to the direction that "the gas flows from the inflow side to the outflow side", in the case where "the direction of the flow of a gas in the porous body layer 40 when the porous body layer 40 is viewed as a whole extends in the vertical direction from a lower side to an upper side on a paper surface on which Fig. 4 is drawn", as illustrated in Fig. 4, the plurality of gas flow path grooves may be formed along the vertical line from the lower side to the upper side of the paper surface on which the Fig. 4 is drawn, or may be formed along directions other than the above-mentioned direction.

The plurality of gas flow path grooves include: a plurality of the gas inflow side grooves 53a, 53b that are formed on the gas inflow side (a lower portion in Fig. 4 and Fig. 6); and the plurality of gas outflow side grooves 54a, 54b that are formed on the gas outflow side (an upper portion in Fig. 4 and Fig. 6). The plurality of gas inflow side grooves 53a, 53b include two or more kinds of (two kinds in this case) gas inflow side grooves 53a, 53b having different lengths.

In the fuel cell gas supply diffusion layer 42A, the two gas inflow side grooves 53a, 53b disposed adjacently to each other have different lengths (see Fig. 6). In other words, the positions of terminal ends on an outflow side of two gas inflow side grooves 53a, 53b disposed adjacently to each other along "x direction" perpendicular to "y direction" directed from the gas inflow side to the gas outflow side exist at positions spaced apart from each other along the "y direction". In the fuel cell gas supply diffusion layer 42A, at least one gas inflow side groove has a length different from lengths of other gas inflow side grooves out of three gas inflow side grooves disposed adjacently to each other, and at least one gas inflow side groove has a length different from lengths of other gas inflow side grooves out of four gas inflow side grooves disposed adjacently to each other.

In this specification, "at least one gas inflow side groove has a length different from lengths of other gas inflow side grooves out of three gas inflow side grooves disposed adjacently to each other" and "at least one gas inflow side groove has a length different from lengths of other gas inflow side grooves out of four gas inflow side grooves disposed adjacently to each other" mean "to define three gas inflow side grooves disposed adjacently to each other as one set of gas inflow side groove group, whichever set of gas inflow side groove group is viewed out of a plurality of set of gas inflow side groove groups included in the gas diffusion layer, at least one gas inflow side groove has a length different from lengths of other gas inflow side grooves out of three gas inflow side grooves" and "to define four gas inflow side grooves disposed adjacently to each other as one set of gas inflow side groove group, whichever set of gas inflow side groove group is viewed out of a plurality of set of gas inflow side groove groups included in the gas diffusion layer, at least one gas inflow side groove has a length different from lengths of other gas inflow side grooves out of four gas inflow side grooves". The same goes for the case of the gas outflow side grooves described later.

In the fuel cell gas supply diffusion layer 42A, a plurality of gas outflow side grooves 54a, 54b include two kinds or more (in this case two kinds) gas outflow side grooves 54a, 54b having different lengths. Two gas outflow side grooves 54a, 54b disposed adjacently to each other have different lengths (see Fig. 6). In other words, the positions of start ends on an inflow side of two gas outflow side grooves 54A, 54B disposed adjacently to each other along the above-mentioned "x direction" exist at positions spaced apart from each other along the above-mentioned "y direction". In the fuel cell gas supply diffusion layer 42A, at least one gas outflow side groove has a length different from lengths of other gas outflow side grooves out of three gas outflow side grooves disposed adjacently to each other, and at least one gas outflow side groove has a length different from lengths of other gas outflow side grooves out of four gas outflow side grooves disposed adjacently to each other.

In the fuel cell gas supply diffusion layer 42A, the gas inflow side grooves 53a having the shortest length out of the plurality of gas inflow side grooves 53a, 53b have a length less than 30% of the length of the porous body layer 40 along a flow path from the inflow side to the outflow side of the gas. The gas inflow side groove 53b having the longest length out of the plurality of gas inflow side grooves 53a, 53b has a length that is 40% or more of the length of the porous body layer 40 along a flow path from the inflow side to the outflow side of the gas.

In the fuel cell gas supply diffusion layer 42A, the gas inflow side groove 53a having the shortest length out of the plurality of gas inflow side grooves 53a, 53b has a length less than 30% of the length of the porous body layer 40 along a flow path from the inflow side to the outflow side of the gas. Further the gas outflow side groove 54b having the longest length out of the plurality of gas outflow side grooves 54a, 54b has a length that is 30% or more of the length of the porous body layer 40 along a flow path from the inflow side to the outflow side of the gas.

Further, the plurality of the gas flow path grooves include, in addition to the plurality of gas inflow side grooves 53a, 53b and the plurality of gas outflow side grooves 54a, 54b, a plurality of relay grooves 55a to 55d formed between the gas inflow side grooves 53a, 53b and the gas outflow side grooves 54a, 54b. The plurality of relay grooves 55a to 55d communicate with each other in the direction (x direction) perpendicular to the direction directed from the inflow side to the outflow side of the gas. To be more specific, the relay grooves 55a, 55b communicate with each other by a communication groove 56a, and the relay grooves 55c, 55d communicate with each other by a communication groove 56b (see Fig. 7). The relay grooves 55a, 55b and the relay grooves 55c, 55d are provided independently from each other and hence, it is also safe to say that, in the fuel cell gas supply diffusion layer 42A, the plurality of relay grooves 55a to 55d are formed in two stages. In the gas flow path grooves such as communication portions between the relay grooves and the communication grooves, suitable chamfering treatment or rounding treatment may be applied to portions where an outside corner or an inside corner is formed.

The plurality of gas inflow side grooves 53a, 53b, the plurality of gas outflow side grooves 54a, 54b and the plurality of relay grooves 55a to 55d are formed so as to be alternately interposed to each other (see Fig. 4 and Fig. 5). Further, in a plan view of the fuel cell gas supply diffusion layer 42A, a rate of a gas flow path groove forming region with respect to an entire area of the porous body layer 40 falls within a range of 30% to 80%. It is preferable that the rate of the area fall within a range of 40% to 70%.

Air (an oxygen gas and a nitrogen gas) that forms a cathode gas diffuses in the porous body layer 40 (gas diffusion layer 43). The porous body layer 40 contains a mixture of an electrically conductive material (preferably a caron-based conductive material) and a polymer resin. By mixing the carbon conductive material in the polymer resin, it is possible to impart high conductivity to the polymer resin, and it is also possible to enhance moldability of a carbon material by bonding property of the polymer resin. The flow fluid resistance of the porous body layer 40 depends on porosity of the porous body layer and an area of surface of the porous body layer through which a fluid flows. The larger the porosity, the smaller the fluid resistance becomes. The larger the area through which the fluid flows, the smaller the fluid resistance becomes. As an approximately standard, in the fuel cell gas supply diffusion layer 42A (for a cathode gas), porosity of the porous body layer 40 is approximately 50% to 85%. With respect to the fuel cell gas supply diffusion layer 41 (for an anode gas), porosity of the porous body layer 40 is approximately 30% to 85%.

By setting porosity of the porous body layer 40 as described above, the communication of a cathode gas, vapor and condensed water between the gas flow path grooves and the porous body layer 40 is properly performed through inner surfaces of the plurality of gas flow path grooves. As a result, it is possible to uniformly supply a large amount of gas to the membrane electrode assembly. Further, it is possible to efficiently discharge a cathode gas that is not used at the time of generating electricity and vapor and condensed water generated at the time of generating electricity to the outside of the gas flow paths. As a result, it is not necessary to form a gas permeation filter where a large number of minute gas flow holes are formed in a gas impermeable layer made of metal, ceramics, a resin or the like on inner surfaces of the gas flow path grooves.

Porosity of the fuel cell gas supply diffusion layer 42A can be adjusted by adjusting the content of the carbon conductive material. As a result, the movement resistance of the fuel cell gas supply diffusion layer 42A can be adjusted. Particularly, in a case where the content of the carbon conductive material is increased, the movement resistance is decreased (porosity is increased). As an opposite case, in a case where the content of the carbon conductive material is decreased, the movement resistance is increased (porosity is decreased). Both the corrosion layer and the dense frame 32 are made of a mixture of a carbon conductive material and a polymer resin and hence, it is preferable to provide the corrosion layer and the dense frame 32 that are densified while ensuring conductivity by setting the content of the carbon conductive material to a suitable value.

The carbon conductive material is not particularly limited. For example, graphite, carbon black, diamond-coated carbon black, silicon carbide, titanium carbide, carbon fibers, carbon nanotubes and the like can be used. As a polymer resin, both a thermosetting resin and a thermoplastic resin can be used. As an example of the polymer resin, a phenol resin, an epoxy resin, a melamine resin, a rubber-based resin, a furan resin, a vinylidene fluoride resin and the like are named.

An inflow path 57 is formed between the cathode gas inlet port 62in and a region where the porous body layer 40 is formed (see Fig. 4). An outflow path 58 is formed between the cathode gas outlet port 62out and the region where the porous body layer 40 is formed. These inflow path 57 and the outflow path 58 are formed so as to support the membrane electrode assembly 81 or a frame 81A of the membrane electrode assembly 81. Accordingly, it is sufficient that these inflow path 57 and the outflow path 58 have the structure which ensures the smooth flow of a cathode gas and can support the membrane electrode assembly 81. For example, the inflow path 57 and the outflow path 58 may be formed of a porous layer having extremely large porosity or a structure where a large number of support struts are arranged. In a region of the porous body layer 40 that faces the inflow path 57, and an elongated gas inflow side stepped portion 51 is formed along a width direction of the metal plate 30. Further, also in a region of the porous body layer 40 that faces the outflow path 58, an elongated gas outflow side stepped portion 52 is formed along the width direction of metal plate 30. The gas inflow side stepped portion 51 and the gas outflow side stepped portion 52 may be omitted.

The porous body layer 40, the inflow path 57 and the outflow path 58 are formed having the same height (thickness) as the dense frame 32. On a surface of the fuel cell gas supply diffusion layer 42Athat opposedly face the metal plate 30, a plurality of gas flow path grooves each formed of a gap are formed. A plurality of gas flow paths are formed between these plurality of gas flow grooves and the metal plate 30. The plurality of gas inflow side grooves 53a, 53b communicate with the inflow path 57 by way of the gas inflow side stepped portion 51, and the plurality of gas outflow side grooves 54a, 54b communicate with the outflow paths 58 by way of the gas outflow side stepped portion 52. The numbers and the structures of the gas flow path grooves are not limited to the structures illustrated in the drawing.

A case is considered where the fuel cell gas supply diffusion layer 42A according to the embodiment 1 is used as a fuel cell for transportation equipment. In this case, although it depends on a kind and a size of the transportation equipment, a lateral width of the porous body layer 40 is approximately 30mm to 300mm, for example. A width of the gas flow path groove is approximately 0.3 mm to 2 mm, for example. A thickness of the porous body layer 40 is approximately 150 µm to 400 µm, for example. A depth of the gas flow path groove is 100 µm to 300 µm, for example. A distance between a bottom of the gas flow path groove and the other surface of the porous body layer 40 (a ceiling thickness) is approximately 100 µm to 300 µm, for example. In a case where the fuel cell gas supply diffusion layer 42A according to the embodiment 1 is used in a fuel cell or a device for electrolysis in applications other than transportation equipment (for example, stationary equipment), the sizes of the respective components are not limited to the above-mentioned sizes, and components having suitable sizes corresponding to required performances or the like can be used.

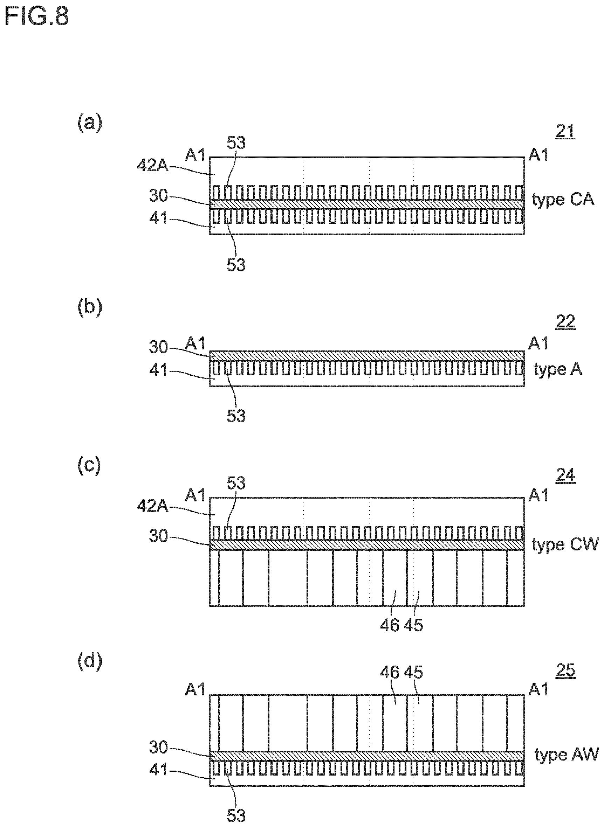

The fuel cell gas supply diffusion layer 41 in the fuel cell separator 22 of a type A also has basically substantially the same configuration as the fuel cell gas supply diffusion layer 42A. However, a gas supplied to the gas supply diffusion layer is a hydrogen gas and hence, the fuel cell gas supply diffusion layer 41 has lower porosity than the fuel cell gas supply diffusion layer 42A, and has a small thickness (see Fig. 8 (b) described later).

In the fuel cell separator 21 of a type CA, as the gas diffusion layer, the fuel cell gas supply diffusion layer 41 and the fuel cell gas supply diffusion layer 42A are used (see Fig. 8 (a) described later). The fuel cell separator 24 of a type CW is a fuel cell separator where a cooling water supply diffusion layer is formed on a surface of the fuel cell separator 23A of a type C on which the fuel cell gas supply diffusion layer 42A is not formed (see Fig. 8 (c) described later). The fuel cell separator 25 of a type AW is a fuel cell separator where a cooling water supply diffusion layer is formed on a surface of the fuel cell separator 22 of a type A on which the fuel cell gas supply diffusion layer 41 is not formed (See Fig. 8 (d) described later).

When the fuel cell stack 20 according to the embodiment 1 is operated, proton (H⁺) is generated at a fuel pole to which an anode gas (a hydrogen gas) is introduced. Proton diffuses in the membrane electrode assembly 81 and moves toward an oxygen pole side, and reacts with oxygen so as to generate water. The generated water is discharged from an oxygen pole side. At this stage of the operation, in the fuel cell separator 23A provided with the fuel cell gas supply diffusion layer 42A having the above-mentioned structure, air flown into the fuel cell separator 23A from the cathode gas inlet port 62in passes through the inflow path 57 and the gas inflow side stepped portion 51, and flows into the gas inflow side grooves 53a, 53b. Apart of air that flows into the gas inflow side stepped portion 51 enters the gas flow path grooves, enters the porous body layer 40 (the gas diffusion layer 43) from the gas flow path grooves, while the other portion directly enters the porous body layer 40 (the gas diffusion layer 43) from an end surface of the porous body layer 40 (the gas diffusion layer 43), and diffuses in the porous body layer 40 (the gas diffusion layer 43).

Air diffuses also in a thickness direction while diffusing in an in-plane direction in the porous body layer 40 (gas diffusion layer 43), is supplied to the membrane electrode assembly 81 mounted on the porous body layer 40 (gas diffusion layer 43) in a state where the membrane electrode assembly 81 is in contact with the porous body layer 40, and contributes to a power generation reaction. A gas that is not used in power generation (an oxygen gas and a nitrogen gas not used) and water (vapor or condensed water) that is generated at the time of power generation flow out to the outflow path 58 through the porous body layer 40 (gas diffusion layer 43), the gas flow path groove and the gas outflow side stepped portion 52. An oxygen gas, a nitrogen gas, and water that flows out into the outflow path 58 is finally discharged from the outflow path 58 through the cathode gas outlet port 62out and the cathode gas discharge port 72out. At this stage of the operation, because of the structure of the fuel cell gas supply diffusion layer 42A, all water is not discharged and a portion of water remains in the porous body layer 40 (gas diffusion layer 43).

The fuel cell gas supply diffusion layer 42A according to the embodiment 1 includes the above-mentioned technical features. Accordingly, at the time of generating power, water (vapor or condensed water) generated by the membrane electrode assembly 81 can be efficiently discharged to the outside of the gas flow path through the porous body layer 40 and the gas flow path grooves.

### [Advantageous effects of embodiment 1]

According to the fuel cell gas supply diffusion layer 42A of the embodiment 1, the plurality of gas flow path grooves (the gas inflow side grooves 53a, 53b, the gas outflow side grooves 54a, 54b and the relay grooves 55a to 55d) are formed on one surface of the porous body layer 40 and hence, the gas movement resistance is reduced compared to the prior art, whereby a large amount of gas can be supplied to the membrane electrode assembly compared to the prior art.

Further, according to the fuel cell gas supply diffusion layer 42A of the embodiment 1, the plurality of gas flow path grooves are formed on one surface of the porous body layer 40 and hence, the supply of gas to the membrane electrode assembly 81 arranged on the other surface of the porous body layer 40 never fails to be performed through the porous body layer 40. Accordingly, a gas can be uniformly supplied to the membrane electrode assembly 81 compared to the case where the plurality of gas flow paths are opened from one surface to the other surface of the porous body layer 40.

Further, according to the fuel cell gas supply diffusion layer 42A of the embodiment 1, the plurality of gas flow path grooves are formed on one surface of the porous body layer 40 and hence, the gas not used in the power generation (in this case, a cathode gas (an oxygen gas, a nitrogen gas) for the fuel cell) can be efficiently discharged to the outside of the gas flow path grooves through the porous body layer 40 and the gas flow path grooves. Further, in an underflow gas region formed between the plurality of gas inflow side grooves 53a, 53b and the plurality of gas outflow side grooves 54a, 54b, a gas that is not used for the power generation can be efficiently discharged to the outside of the gas flow path grooves in a form that the gas is pushed out into an underflow gas flow. Accordingly, the movement resistance of the gas can be maintained at a low level compared to the prior art and hence, the reaction gas concentration can be maintained at high level whereby it is possible to provide the gas diffusion layer where reaction efficiency (power generation efficiency of the fuel cell in the case of the embodiment 1) can be enhanced compared to the prior art.

Further, according to the fuel cell gas supply diffusion layer 42A of the embodiment 1, the plurality of gas flow path grooves are formed on one surface of the porous body layer 40. Accordingly, moisture (vapor or condensed water) generated in the membrane electrode assembly 81 at the time of power generation can be efficiently discharged to the outside of the gas flow path grooves through the porous body layer 40 and the gas flow path grooves. Further, in the underflow gas region, the moisture (vapor or condensed water) can be efficiently discharged to the outside of the gas flow path grooves in a form that the moisture is pushed out by the underflow gas flow thus providing the gas diffusion layer having excellent water discharge ability compared to the prior art.

Further, according to the fuel cell gas supply diffusion layer 42A of the embodiment 1, the plurality of the gas flow path grooves include the plurality of gas inflow side grooves 53a, 53b and the plurality of gas outflow side grooves 54a, 54b, and among these grooves, the plurality of gas inflow side grooves 53a, 53b include two or more kinds of gas inflow side grooves 53a, 53b having different lengths. Accordingly, out of the plurality of gas flow inflow side grooves, due to an action of the gas inflow side groove 53a having a relatively small length (an outflow side terminal portion), the porous body layer 40 in the inflow side region that is originally likely to be dried is minimally dried and hence, lowering of a reaction efficiency due to excessive drying of the porous body layer 40 can be suppressed. Further, out of the plurality of gas inflow side grooves 53a, 53b, due to an action of the gas inflow side grooves 53b having a relatively large length, moisture (vapor or condensed water) that is originally liable to be stagnated is efficiently discharged through the gas inflow side grooves 53b thus enhancing water discharge property. Further, in a region that is away from the inflow side region and where a gas pressure is originally liable to be lowered, the gas pressure is minimally lowered and hence, lowering of a reaction efficiency due to lowering of the gas pressure can be suppressed. With such advantages, the fuel cell gas supply diffusion layer 42A according to the embodiment 1 can increase a reaction efficiency (power generation efficiency of the fuel cell in the case of embodiment 1) compared to the prior art and, further, the fuel cell gas supply diffusion layer 42A according to the embodiment 1 becomes a gas diffusion layer having excellent water discharge property compared to the prior art.

Further, in the fuel cell gas supply diffusion layer 42A according to the embodiment 1, two gas inflow side grooves 53a, 53b disposed adjacently to each other have different lengths. That is, the positions of outflow side terminal portions (dead end portions) of two gas inflow side grooves 53a, 53b disposed adjacently along the above-mentioned x direction exist at locations spaced apart from each other in the above-mentioned y direction and hence, the flow outflow side terminal portions are further dispersed. Accordingly, the fuel cell gas supply diffusion layer 42A according to the embodiment 1 can further increase a reaction efficiency. The fuel cell gas supply diffusion layer 42A according to the embodiment 1 also becomes a gas diffusion layer having more excellent water discharge property.

In the present invention, out of four or three gas inflow side grooves disposed adjacently to each other, at least one gas inflow side groove may have a length different from the length of other gas inflow side grooves. Also in this case, the fuel cell gas supply diffusion layer acquires an advantageous effect of the same nature as in the case where two gas inflow side grooves disposed adjacently to each other have different lengths.

Further, according to the fuel cell gas supply diffusion layer 42A of the embodiment 1, out of the plurality of gas inflow side grooves 53a, 53b, the gas inflow side groove 53a having the shortest length has the length less than 30% of a length from a gas inflow side to a gas outflow side of the porous body layer 40 and hence, lowering of reaction efficiency due to excessive drying of the porous body layer 40 can be further suppressed. Further, according to the fuel cell gas diffusion layer 42A of the embodiment 1, out of the plurality of gas inflow side grooves 53a, 53b, the gas inflow side groove 53b having the largest length has the length that is 40% or more of the length of the gas inflow side to the gas outflow side of the porous body layer 40 and hence, water discharge property can be further increased, and lowering of reaction efficiency due to lowering of a gas pressure can be further suppressed.

Further, in the fuel cell gas supply diffusion layer 42A according to the embodiment 1, the plurality of gas outflow side grooves 54a, 54b include two kinds or more gas outflow side grooves 54a, 54b having different lengths. In this manner, in the fuel cell gas supply diffusion layer 42A according to the embodiment 1, the plurality of gas outflow side grooves 54a, 54b also include two or more kinds of gas outflow side grooves 54a, 54b having the different lengths. With such a configuration, out of the plurality of gas outflow side grooves 54a, 54b, due to an action of the gas outflow side grove 54b having the relatively large length, discharge efficiency of the moisture (vapor or condensed water) that is originally liable to be stagnated is increased and hence, the gas diffusion is enhanced whereby reaction efficiency (power generation efficiency in case of the embodiment 1) is enhanced. On the other hand, with respect to the plurality of the gas outlet grooves 54a, 54b, due to action of the gas outflow side groove 54a having the relatively small length, also in a region on a gas outflow side, a predetermined reaction (power generation in the case of the embodiment 1) is performed by an underflow of a gas from the gas diffusion groove on an upstream side and hence, reaction efficiency (power generation efficiency in the case of embodiment 1) can be increased as a whole.

Further, in the fuel cell gas supply diffusion layer 42A according to the embodiment 1, two gas outflow side grooves 54a, 54b disposed adjacently to each other have different lengths and hence, the long groove and the short groove are arranged in a dispersed manner. With such a configuration, the fuel cell gas supply diffusion layer 42A according to the embodiment 1 can further increase reaction efficiency and, further, becomes the gas diffusion layer having the further excellent water discharge property.

In the present invention, out of four or three gas outflow side grooves disposed adjacently to each other, at least one gas outflow side groove may have a length different from the length of other gas outflow side grooves. In this case, the fuel cell gas supply diffusion layer acquires an advantageous effect of the same nature as in the case where two gas outflow side grooves disposed adjacently to each other have different lengths.

Further, according to the fuel cell gas supply diffusion layer 42A of the embodiment 1, out of the plurality of gas inflow side grooves 53a, 53b, the gas inflow side groove 53a having the shortest length has the length less than 30% of a length from a gas inflow side to a gas outflow side of the porous body layer 40 and hence, drying of the porous body layer 40 on the inflow side that is liable to be easily dried can be minimized whereby reaction efficiency can be further enhanced. Further, according to the fuel cell gas diffusion layer 42A of the embodiment 1, out of the plurality of gas outflow side grooves 54a, 54b, the gas outflow side groove 54b having the largest length has the length that is 30% or more of the length of the gas inflow side to the gas outflow side of the porous body layer 40 and hence, moisture (vapor or condensed water) that is liable to be stagnated can be efficiently discharged through the gas outflow side groove 54b whereby the diffusion of the gas can be enhanced. Also, from this point of view, the reaction efficiency can be further increased.

Further, according to the fuel cell gas supply diffusion layer 42A of the embodiment 1, the plurality of gas flow path grooves include the plurality of relay grooves 55a to 55d and hence, the number of outflow side terminal portions (dead end portions) can be increased whereby an amount of gas that passes the underflow region is increased so that reaction efficiency can be further increased. Further, it is also possible to realize the prevention of drying of the porous body layer 40 and the optimization of the balance in the enhancement of discharge efficiency of moisture (vapor or condensed water).

Further, according to the fuel cell gas supply diffusion layer 42A of the embodiment 1, the plurality of relay grooves 55a to 55d communicate with each other along the direction (x direction) perpendicular to the direction that a gas flows from the inflow side to the outflow side and hence, it is possible to make a gas pressure uniform along the direction that the plurality of relay grooves 55a to 55d communicate with each other.

Further, according to the fuel cell gas supply diffusion layer 42A of the embodiment 1, the plurality of gas inflow side grooves 53a, 53b, the plurality of gas outflow side grooves 54a, 54b and the plurality of relay grooves 55a to 55d are formed so as to be alternately interposed to each other and hence, a gas pressure can be made uniform and an amount of underflow gas can be increased.

Further, according to the fuel cell gas supply diffusion layer 42A of the embodiment 1, in a plan view of the fuel cell gas supply diffusion layer 42A, a rate of an area of a gas flow path groove forming region with respect to an entire area of the porous body layer 40 falls within a range of 30% to 80% and hence, the fuel cell gas supply diffusion layer 42A can acquire both the sufficient gas supply ability and the sufficient mechanical strength.

Further, according to the fuel cell gas supply diffusion layer 42A of the embodiment 1, the fuel cell gas supply diffusion layer 42A is a fuel cell gas supply diffusion layer for a cathode gas and hence, it is possible to increase the performance of the fuel cell stack.

The fuel cell separator 23A according to the embodiment 1, is a separator that includes: the metal plate 30 that is a gas shield plate; and the fuel cell gas supply diffusion layer 42A disposed on at least one surface of the metal plate 30. The fuel cell gas supply diffusion layer 42A is the fuel cell gas supply diffusion layer 42A according to the embodiment 1, and is arranged with respect to the metal plate 30 such that the plurality of gas flow path grooves (the gas inflow side grooves 53a, 53b, the gas outflow side grooves 54a, 54b and the relay grooves 55a to 55d) are disposed on the metal plate 30 side. Accordingly, the gas flow paths are formed by the gas flow path grooves and the metal plate 30 and hence, it is possible to provide the separator that can increase the reaction efficiency compared to the prior art.

The fuel cell stack 20 according to the embodiment 1, is a fuel cell stack where the separators and the membrane electrode assemblies 81 are stacked to each other. The separator is the fuel cell separator 23A according to the embodiment 1 where the fuel cell separators 23A and the membrane electrode assemblies 81 are stacked with each other with the positional relationship that the membrane electrode assembly 81 is positioned on the surface of the fuel cell gas supply diffusion layer 42A on a side where the plurality of the gas flow path grooves (gas inflow side grooves 53a, 53b, the gas outflow side grooves 54a, 54b and the relay grooves 55a to 55d) are not formed. Accordingly, the fuel cell stack 20 according to the embodiment 1 becomes the fuel cell stack that can increase reaction efficiency compared to the prior art.

Further, according to the fuel cell stack 20 of the embodiment 1, the fuel cell stack 20 is a fuel cell stack and hence, the fuel cell stack 20 according to the embodiment 1 becomes a fuel cell stack that can increase the power generation efficiency of a fuel cell compared to the prior art.

### [Method of manufacturing fuel cell separator 23A]

As an example, the corrosion layer, the dense frame 32, the fuel cell gas supply diffusion layer 42A and the like can be formed by isostatic pressing using a paste-like material obtained by mixing a thermosetting resin (or a thermoplastic resin), carbon-based conductive powder (and carbon fibers depending on a situation), resin powder and a volatile solvent to each other. Unique shapes of the respective members and portions can be formed by printing, stamping, squeezing or the like, for example. Further, the respective members can be also arranged or formed by thermocompression bonding or roll pressing (hot pressing).

The above-mentioned manufacturing method is also appliable to the manufacture of the separators (the fuel cell separators 21, 22, 24, 25) other than the fuel cell separator 23A.

### [Separators other than fuel cell separator 23A]

Fig. 8 is a cross-sectional view of the separators (the fuel cell separator 21, 22, 24, 25) other than the fuel cell separator 23A. Fig. 8(a) is a cross-sectional view of a fuel cell separator 21 of a type CA, Fig.8 (b) is a cross-sectional view of the fuel cell separator 22 of a type A, Fig. 8(c) is a cross-sectional view of the fuel cell separator 24 of a type CW, and Fig. 8(d) is a cross-sectional view of the fuel cell separator 25 of a type AW. Fig. 8 is the cross-sectional view at a cross section that corresponds to the A1-A1 cross section of the fuel cell separator 23A (See fig. 5(a)). In Fig. 8, in view of the difficulty in understanding the drawing in a case where symbols are given to all of a plurality of gas flow path grooves, symbol "53" that indicates the gas flow path groove (any one of the gas inflow side groove, the gas outflow side groove, or the relay groove) is added to only one gas flow path groove.

The gas diffusion layer according to the present invention is applicable to the (cathode gas) fuel cell gas supply diffusion layer 42A and / or the (anode gas) fuel cell gas supply diffusion layer 41 of the fuel cell separator 21(see Fig. 8 (a)). Further, the gas diffusion layer according to the present invention is applicable to the (anode gas) fuel cell gas supply diffusion layer 41 of the fuel cell separator 22 (See Fig. 8 (b)). Further, the gas diffusion layer of the present invention is applicable to the (cathode gas) fuel cell gas supply diffusion layer 42A of the fuel cell separator 24 (see Fig. 8(c)). Further, the gas diffusion layer according to the present invention is applicable to the (anode gas) fuel cell gas supply diffusion layer 41 of the fuel cell separator 25 (see Fig. 8(d)).

In this manner, even in the case where the gas diffusion layer according to the present invention is applied to the fuel cell gas supply diffusion layers of the fuel cell separators 21, 22, 24, 25 described above, the gas diffusion layer according to the present invention becomes a gas diffusion layer that can increase reaction efficiency (power generation efficiency in case of the fuel cell) compared to the prior art.

### [Embodiment 2]

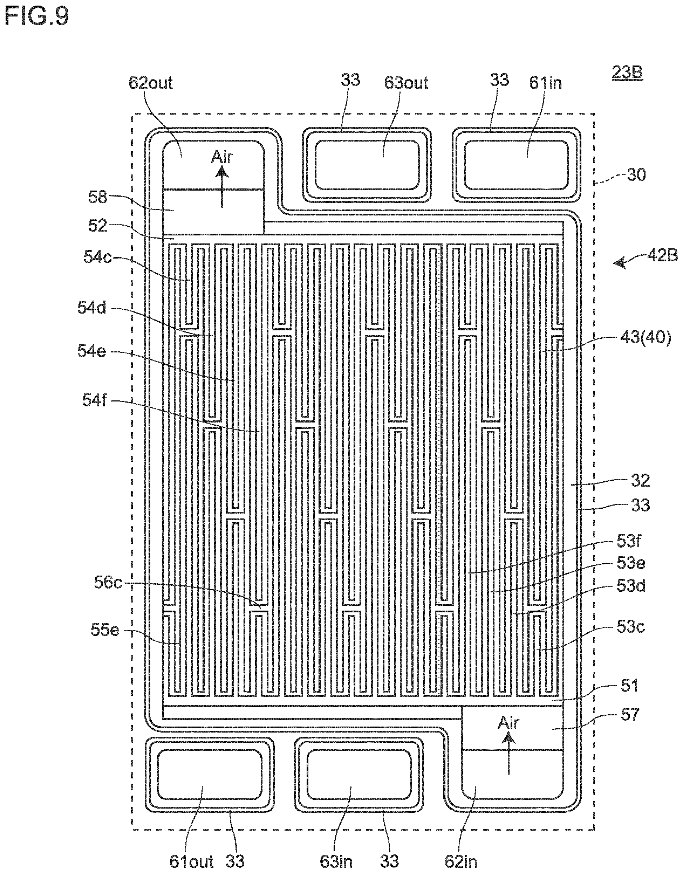

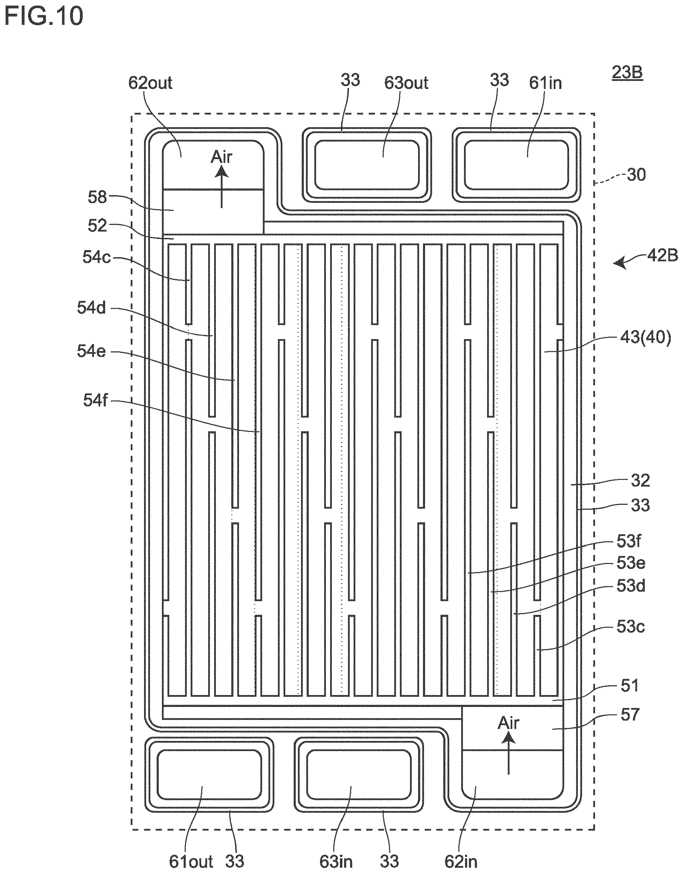

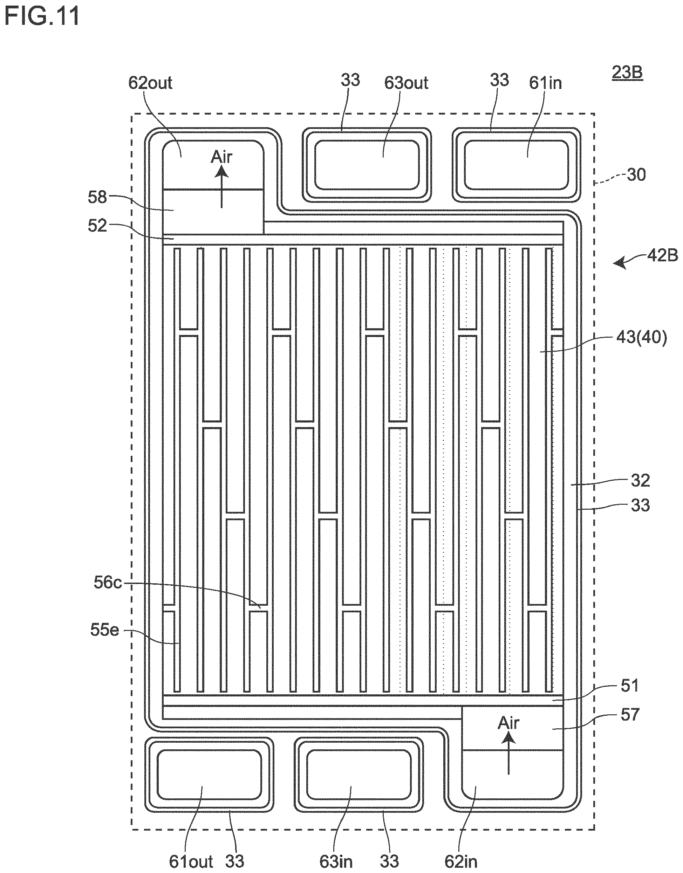

Fig. 9 is a plan view of a fuel cell separator 23B according to the embodiment 2. However, in the same manner as the case illustrated in Fig. 4, to express a flow path pattern of the fuel cell gas supply diffusion layer 42B, the illustration of a metal plate 30 is omitted. The same goes for the configurations illustrated in Fig. 10 to Fig. 23 and Fig. 29 to Fig. 31 described hereinafter. Fig. 10 is a view for describing gas inflow side grooves 53c to 53f and gas outflow side grooves 54c to 54f in the fuel cell gas supply diffusion layer 42B according to the embodiment 2. Fig. 11 is a view for describing relay grooves 55e and communication grooves 56c in the fuel cell gas supply diffusion layer 42B according to the embodiment 2.

The fuel cell gas supply diffusion layer 42B of the fuel cell separator 23B according to the embodiment 2 includes basically substantially the same configuration as the fuel cell gas supply diffusion layer 42A according to the embodiment 1. However, the fuel cell gas supply diffusion layer 42B differs from the fuel cell gas supply diffusion layer 42A according to the embodiment 1 with respect to the configuration of the gas flow path grooves. In the fuel cell gas supply diffusion layer 42B according to the embodiment 2, as illustrated in Fig. 9 to Fig. 11, two kinds or more (four kinds in this case) gas inflow side grooves 53c to 53f and two kinds or more gas outflow side grooves 54c to 54f having different lengths respectively are formed. Further, relay grooves 55e are formed such that the relay grooves 55e are interposed between the gas inflow side grooves 53c to 53f and between the gas outflow side grooves 54c to 54f. The relay grooves 55e are provided in plural, and the respective relay grooves 55e communicate with each other through communication grooves 56c.

The fuel cell gas supply diffusion layer 42B and the fuel cell separator 23B according to the embodiment 2 become, in the same manner as the fuel cell gas supply diffusion layer 42A and the fuel cell separator 23A according to the embodiment 1, a gas diffusion layer and a separator respectively that can increase reaction efficiency compared to the prior art. Further, according to the fuel cell gas supply diffusion layer 42B and the fuel cell separator 23B according to the embodiment 2, it is also possible to acquire common advantageous effects brought about by common technical features with the fuel cell gas supply diffusion layer 42A and the fuel cell separator 23A according to the embodiment 1.

### [Embodiment 3]

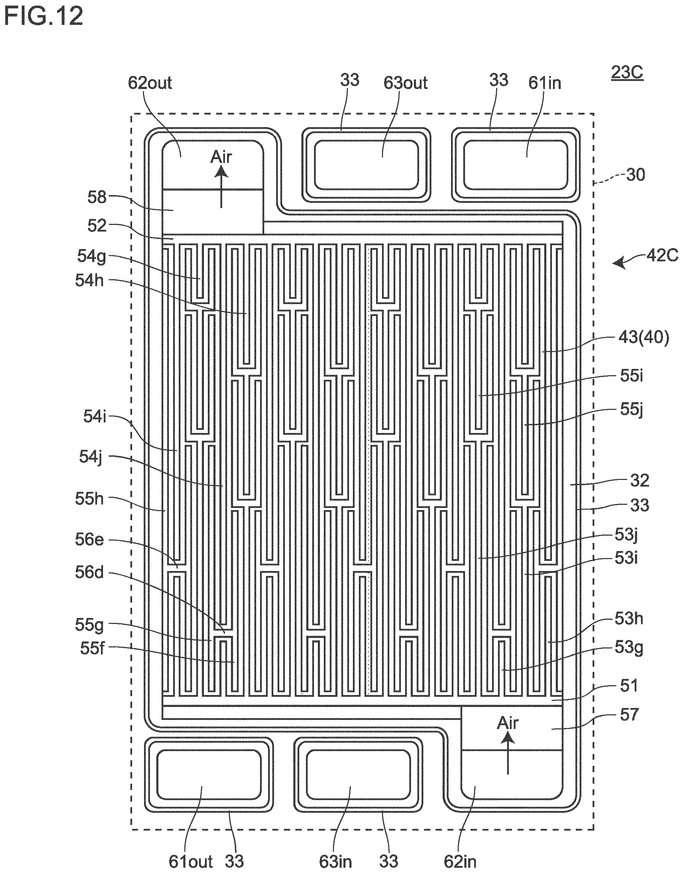

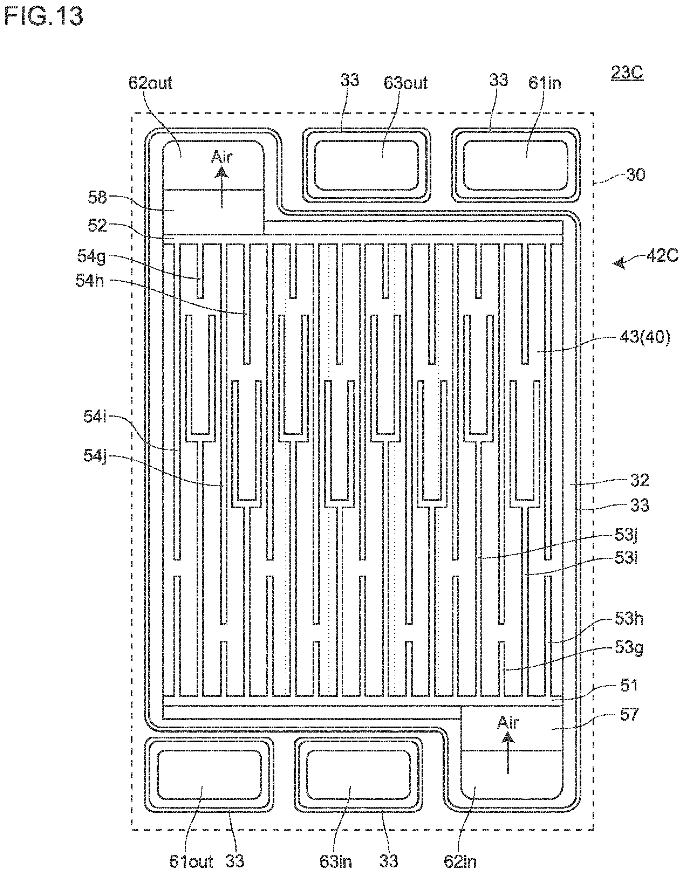

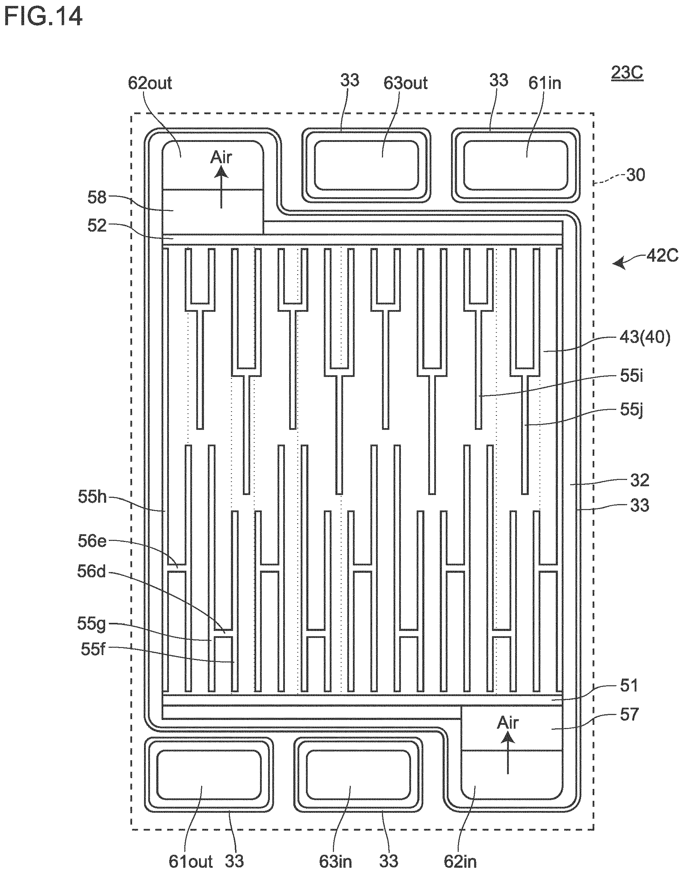

Fig. 12 is a plan view of a fuel cell separator 23C according to the embodiment 3. Fig. 13 is a view for describing gas inflow side grooves 53g to 53j and gas outflow side grooves 54g to 54j in a fuel cell gas supply diffusion layer 42C according to the embodiment 3. Fig. 14 is a view for describing relay grooves 55d to 55j and communication grooves 56d, 56e in the fuel cell gas supply diffusion layer 42C according to the embodiment 3.

The fuel cell gas supply diffusion layer 42C in the fuel cell separator 23C according to the embodiment 3 includes basically substantially the same configuration as the fuel cell gas supply diffusion layer 42A according to the embodiment 1. However, the fuel cell gas supply diffusion layer 42C differs from the fuel cell gas supply diffusion layer 42A according to the embodiment 1 with respect to the configuration of gas flow path grooves. As illustrated in Fig. 12 to Fig. 14, in the fuel cell gas supply diffusion layer 42C according to the embodiment 3, two kinds or more (four kinds in this case) gas inflow side grooves 53g to 53j having different lengths respectively and two kinds or more (four kinds in this case) gas outflow side grooves 54g to 54j having different lengths respectively are formed. Further, the relay grooves 55f to 55j are formed such that the relay grooves 55f to 55j are interposed between the gas inflow side grooves 53g to 53j and are interposed between the gas outflow side grooves 54g to 54j. With respect to these grooves, the gas inflow side grooves 53i, 53j and the relay grooves 55i, 55j each include a branching portion at which one groove is bifurcated into two grooves. Further, the relay groove 55f and the relay groove 55g communicate with each other by the communication groove 56d, and the relay grooves 55f, 55g and the relay groove 55h communicate with each other by the communication groove 56d. That is, the fuel cell gas diffusion layer 42c includes, as the plurality of relay grooves, a plurality of relay grooves 55f to 55h where a pair of relay grooves that is formed such that two relay grooves disposed adjacently to each other communicate with each other are formed along a direction perpendicular to a direction directed from the gas inflow side to the gas outflow side.

The fuel cell gas supply diffusion layer 42C and the fuel cell separator 23C according to the embodiment 3 become, in the same manner as the fuel cell gas supply diffusion layer 42A and the fuel cell separator 23A according to the embodiment 1, a gas diffusion layer and a separator that can increase reaction efficiency compared to the prior art. Further, according to the fuel cell gas supply diffusion layer 42C according to the embodiment 3, the fuel cell gas diffusion layer 42c includes, as the plurality of relay grooves, a plurality of relay grooves 55f to 55h where a pair of relay grooves that is formed such that two relay grooves disposed adjacently to each other communicate with each other are formed along a direction perpendicular to a direction directed from the gas inflow side to the gas outflow side. With such a configuration, a pressure loss can be reduced and hence, a gas, vapor or condensed water that form an underflow can be made to flow easily toward a downstream side whereby a gas can be more uniformly dispersed and further, vapor or condensed water can be more efficiently discharged to the outside of the fuel cell gas supply diffusion layer 42C. Further, according to the fuel cell gas supply diffusion layer 42C according to the embodiment 3, with respect to some of the plurality of gas flow path grooves, "a branching portion where one groove is bifurcated to two grooves" is provided. Accordingly, a gas pressure can be made uniform at limited locations. Further, the number of outflow side terminal portions (dead end portions) can be increased and hence, an amount of gas that passes through an underflow region can be increased and hence, a reaction efficiency can be further increased. Further, according to the fuel cell gas supply diffusion layer 42C and the fuel cell separator 23C according to the embodiment 3, common advantageous effects can be also acquired because of common technical features with the fuel cell gas supply diffusion layer 42A and the fuel cell separator 23A according to the embodiment 1.

### [Embodiment 4]

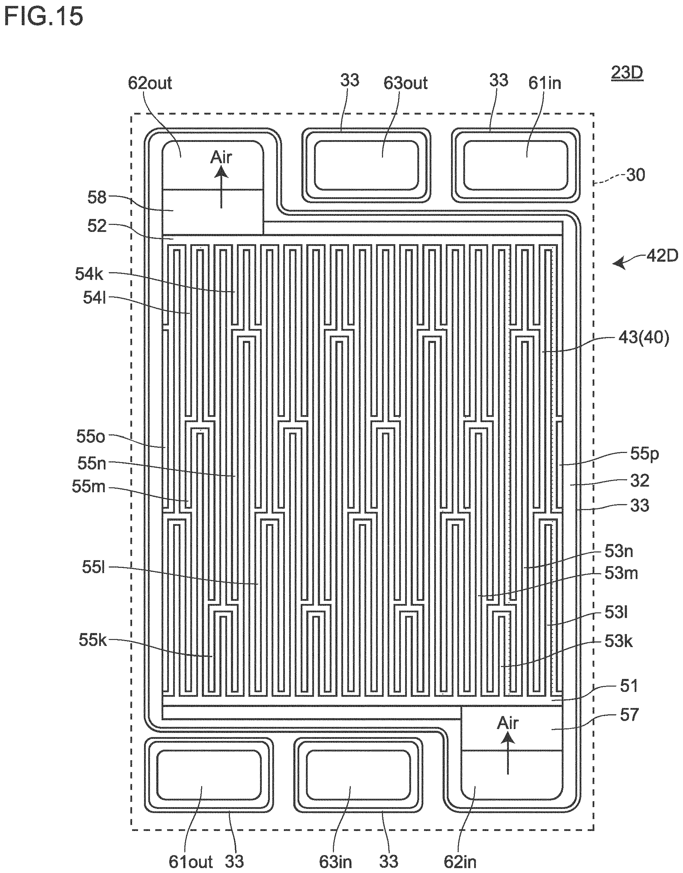

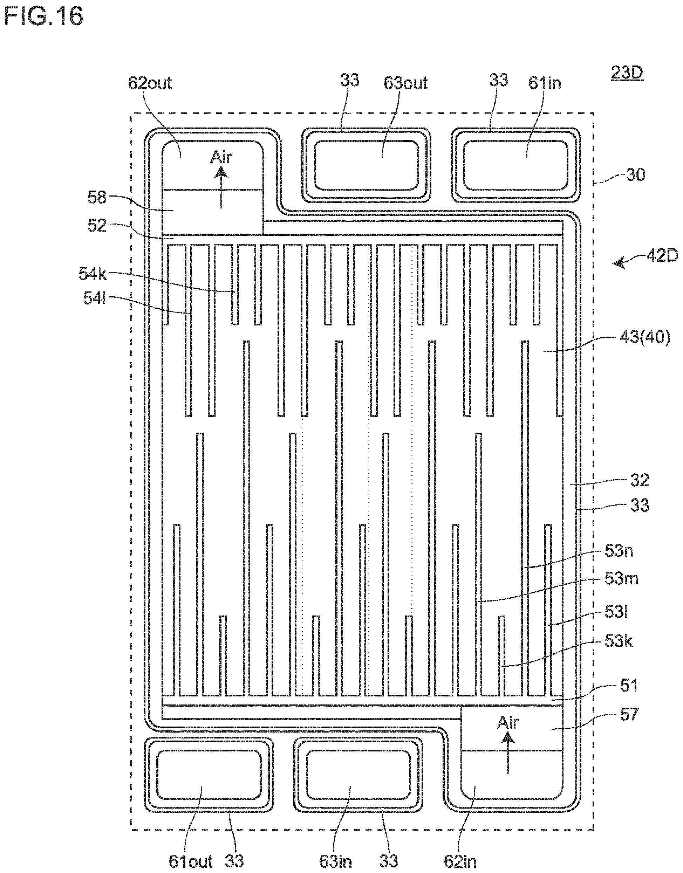

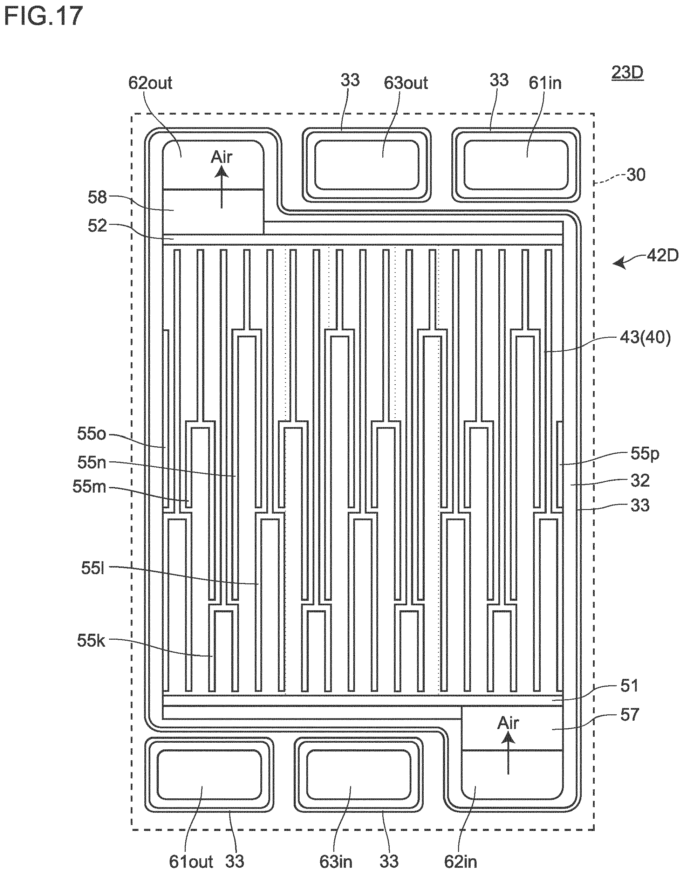

Fig. 15 is a plan view of a fuel cell separator 23D according to the embodiment 4. Fig. 16 is a view for describing gas inflow side grooves 53k to 53n and gas outflow side grooves 54k, 54l in a fuel cell gas supply diffusion layer 42D according to the embodiment 4. Fig. 17 is a view for describing relay grooves 55k to 55p in the fuel cell gas supply diffusion layer 42D according to the embodiment 4.

The fuel cell gas supply diffusion layer 42D in the fuel cell separator 23D according to the embodiment 4 includes basically substantially the same configuration as the fuel cell gas supply diffusion layer 42A according to the embodiment 1. However, the fuel cell gas supply diffusion layer 42D differs from the fuel cell gas supply diffusion layer 42A according to the embodiment 1 with respect to the configuration of gas flow path grooves. As illustrated in Fig. 15 to Fig. 17, in the fuel cell gas supply diffusion layer 42D according to the embodiment 4, two kinds or more gas inflow side grooves 53k to 53n having different lengths respectively and two kinds or more gas outflow side grooves 54k, 54l having different lengths respectively are formed. Further, the relay grooves 55k to 55p are formed such that the relay grooves 55k to 55p are interposed between the gas inflow side grooves 53k to 53n and are interposed between the gas outflow side grooves 54k, 54l. With such a configuration, the relay grooves 55k to 55n each include a merging portion where two grooves are merged into one groove. As a modification of the embodiment 4, a mode is considered where the gas inflow side grooves 53k to 53n and the gas outflow side grooves 54k, 54l are replaced to each other, and the relay grooves 55k to 55n are arranged and have shapes corresponding to the above-described replacement.

The fuel cell gas supply diffusion layer 42D and the fuel cell separator 23D according to the embodiment 4 become, in the same manner as the fuel cell gas supply diffusion layer 42A and the fuel cell separator 23A according to the embodiment 1, a gas diffusion layer and a separator that can increase reaction efficiency compared to the prior art. Further, according to the fuel cell gas supply diffusion layer 42D according to the embodiment 4, some of the plurality of the gas flow grooves have "a merging portion where two grooves are merged into one groove" and hence, a gas pressure can be made uniform at limited locations. Further, according to the fuel cell gas supply diffusion layer 42D and the fuel cell separator 23D according to the embodiment 4, common advantageous effects can be also acquired because of common technical features with the fuel cell gas supply diffusion layer 42A and the fuel cell separator 23A according to the embodiment 1.

### [Embodiments 5 to 8]

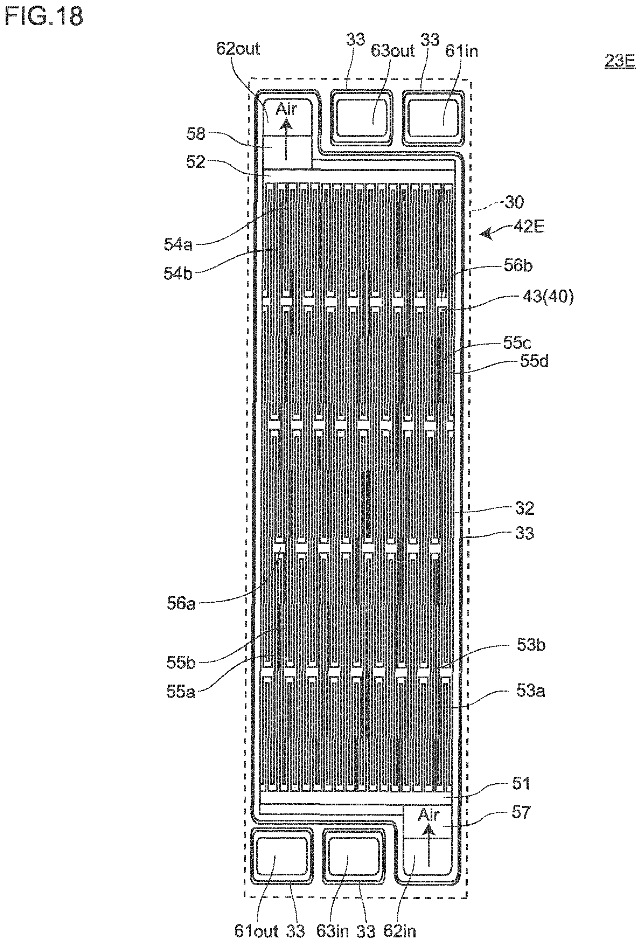

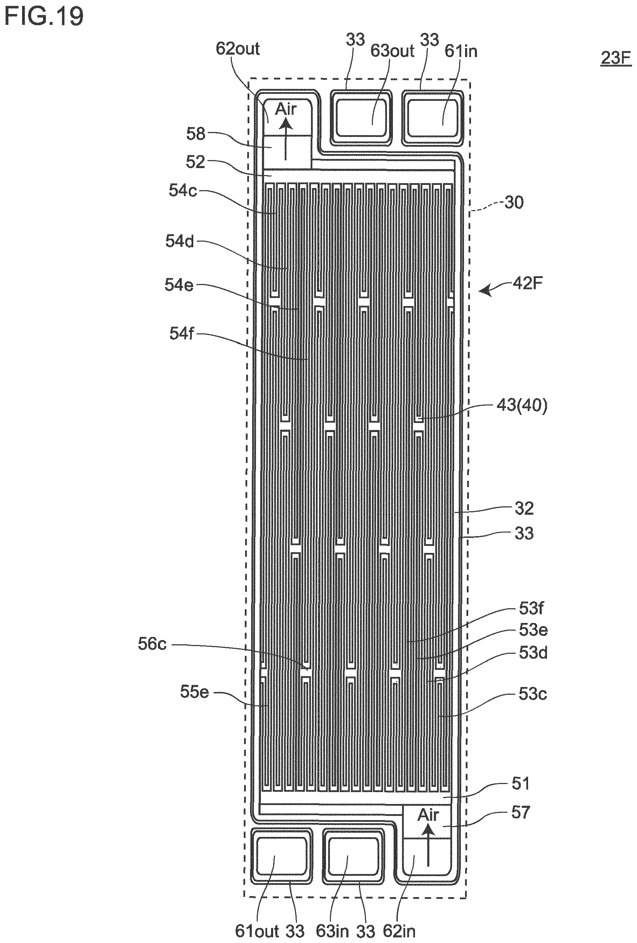

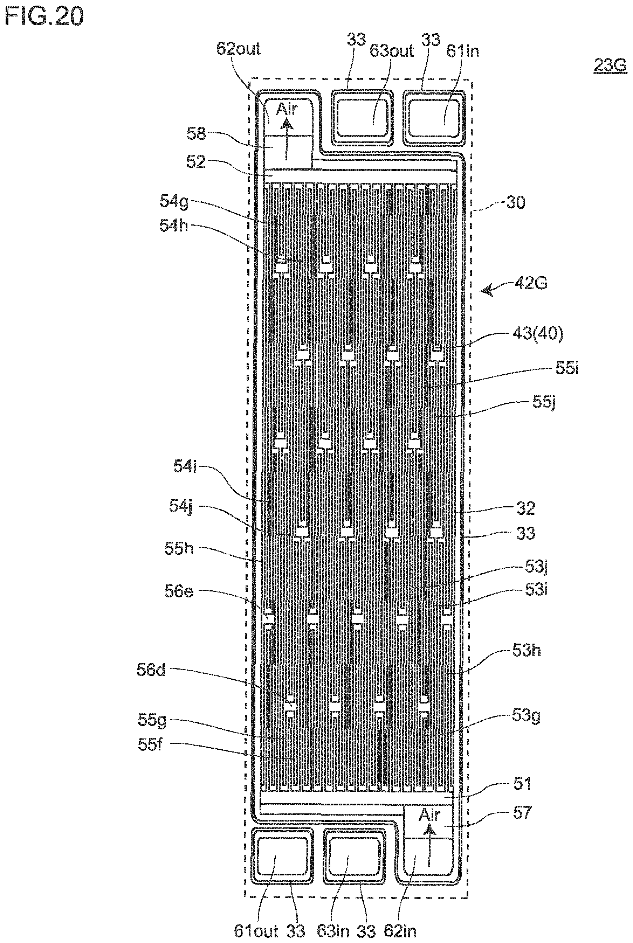

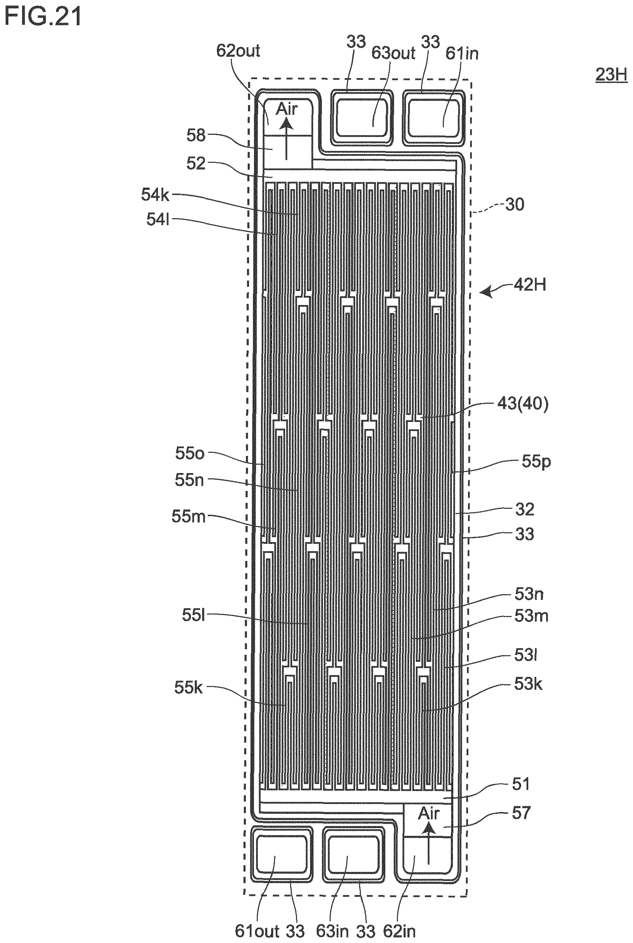

Fig. 18 is a plan view of a fuel cell separator 23E according to an embodiment 5. Fig. 19 is a plan view of a fuel cell separator 23F according to an embodiment 6. Fig. 20 is a plan view of a fuel cell separator 23G according to an embodiment 7. Fig. 21 is a plan view of a fuel cell separator 23H according to an embodiment 8.

The fuel cell separators 23E to 23H and fuel cell gas supply diffusion layers 42E to 42H according to the embodiments 5 to 8 include basically substantially the same configuration as the fuel cell separators 23A to 23D and the fuel cell gas supply diffusion layers 42A to 42D according to the embodiments 1 to 4. However, an aspect rate of the fuel cell gas supply diffusion layer differs from an aspect rate of the fuel cell gas supply diffusion layer in the case of the fuel cell separators 23A to 23D and the fuel cell gas supply diffusion layers 42A to 42D according to the embodiments 1 to 4. Further, in the fuel cell gas supply diffusion layers 42E to 42H according to embodiments 5 to 8, a width or the like of each of respective grooves that form gas flow path grooves differs from the width of the corresponding groove in the fuel cell separators 23A to 23D according to the embodiments 1 to 4. However, with respect to a pattern of the gas flow path grooves, the groove pattern adopted by the fuel cell gas supply diffusion layer 42E according to the embodiment 5 is substantially equal to the groove pattern adopted by the fuel cell gas supply diffusion layer 42A according to the embodiment 1, the groove pattern adopted by the fuel cell gas supply diffusion layer 42F according to the embodiment 6 is substantially equal to the groove pattern adopted by the fuel cell gas supply diffusion layer 42B according to the embodiment 2, the groove pattern adopted by the fuel cell gas supply diffusion layer 42G according to the embodiment 7 is substantially equal to the groove pattern adopted by the fuel cell gas supply diffusion layer 42C according to the embodiment 3, and the groove pattern adopted by the fuel cell gas supply diffusion layer 42H according to the embodiment 8 is substantially equal to the groove pattern adopted by the fuel cell gas supply diffusion layer 42D according to the embodiment 4 (see Fig. 18 to Fig. 21).

The fuel cell gas supply diffusion layers 42E to 42H and the fuel cell separators 23E to 23H according to the embodiments 5 to 8 become, in the same manner as the fuel cell gas supply diffusion layer 42A and the fuel cell separator 23A according to the embodiment 1, fuel cell gas supply diffusion layers and fuel cell separators that can increase reaction efficiency compared to the prior art. Further, according to the fuel cell separators 23E to 23H and the fuel cell gas supply diffusions layers 42E to 42H according to the embodiments 5 to 8, it is possible to acquire substantially the same advantageous effects as the corresponding fuel cell gas supply diffusion layers 42A to 42D and the corresponding fuel cell separators 23A to 23D.

### [Test Example]

Next, a gas diffusion layer and a separator according to the present invention were actually manufactured thus forming unit cells each form a minimum unit of a fuel cell, and a test how the difference in a pattern of gas flow path grooves affects properties of the fuel cell was performed. The result of the test was described hereinafter. With respect to an example 1, an example 2 and a comparison example described later, in carrying out the test, "the relationship between current density and voltage" was measured (test example 1), the "the relationship between current density and pressure of cathode gas" was measured (test example 2), and "distribution of current density" was measured (test example 3). These tests were performed for comparing the test results with respect to the example 1, the example 2, and the comparison example to each other and hence, these tests may be also referred to as "comparative tests".

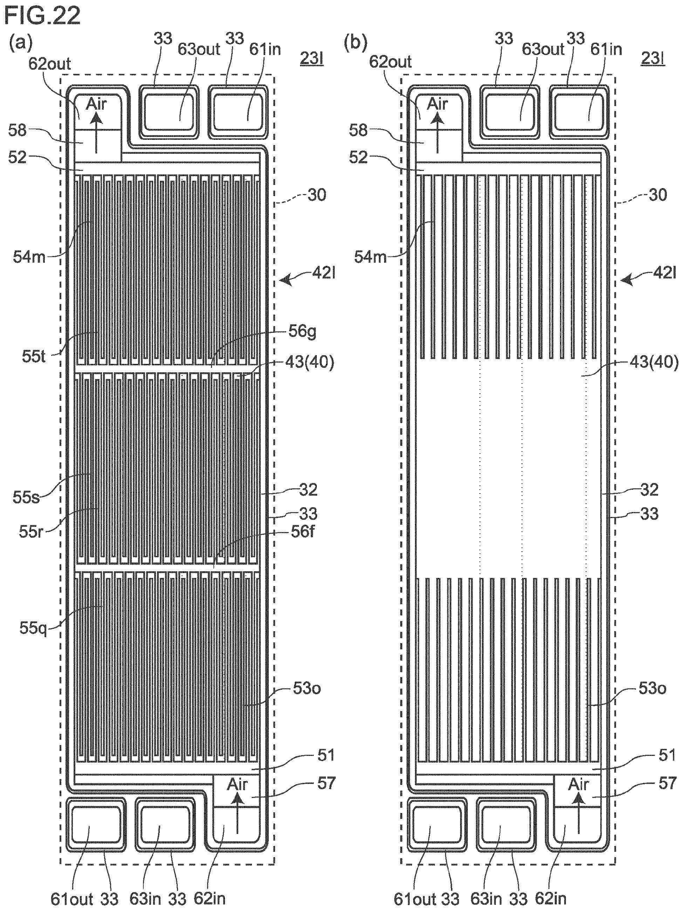

First, the unit cell manufactured by the test example is described. The test was performed by using three kinds of unit cells, that is, the unit cell according to the example 1 (hereinafter simply referred to as "example 1"), the unit cell according to the example 2 (hereinafter simply referred to as "example 2") and the unit cell according to the comparison example (hereinafter simply referred to as "comparison example"). As the unit cell, a unit cell that was manufactured by sandwiching a membrane electrode assembly by a fuel cell separator (a separator of a type C) for a cathode gas and a fuel cell separator (a separator of a type A) for an anode gas was used (not illustrated in the drawings). In the fuel cell gas supply diffusion layer for the cathode gas according to the example 1, the gas flow path groove adopted the shape described in embodiment 5 (see Fig. 18). In the fuel cell gas supply diffusion layer for the cathode gas according to the example 2, the gas flow path groove adopted the shape described in embodiment 8 (see Fig. 21). In the fuel cell gas supply diffusion layer for the cathode gas in the comparison example, the gas flow path groove adopts the shape illustrated in Fig. 22.

Fig. 22 is a plan view of a fuel cell separator 23I in the comparison example. Fig. 22 (a) is a view illustrating the entirety of a gas flow path grooves, and Fig. 22 (b) is a view illustrating only gas inflow side grooves 53o and gas outflow side grooves 54m out of the gas flow path grooves (in the drawing, relay grooves 55q to 55t and communication grooves 56f, 56g not being illustrated). In the fuel cell gas supply diffusion layer for the cathode gas of the comparison example, the gas flow path groove adopted the shape of the gas flow path grooves formed in the fuel cell gas supply diffusion layer 42I of the fuel cell separator 23I (see Fig. 22). In the fuel cell gas supply diffusion layer 42I, as the gas inflow side groove 53o and the gas outflow side groove 54m, the grooves respectively have the same length were used. Among the relay grooves 55q to 55t, the relay grooves 55q, 55r communicate with each other through the communication grooves 56f that are communicably disposed between the relay grooves 55q, 55r in the width direction (in the x direction), and the relay grooves 55s, 55t are communicated with each other by the communication grooves 56g.

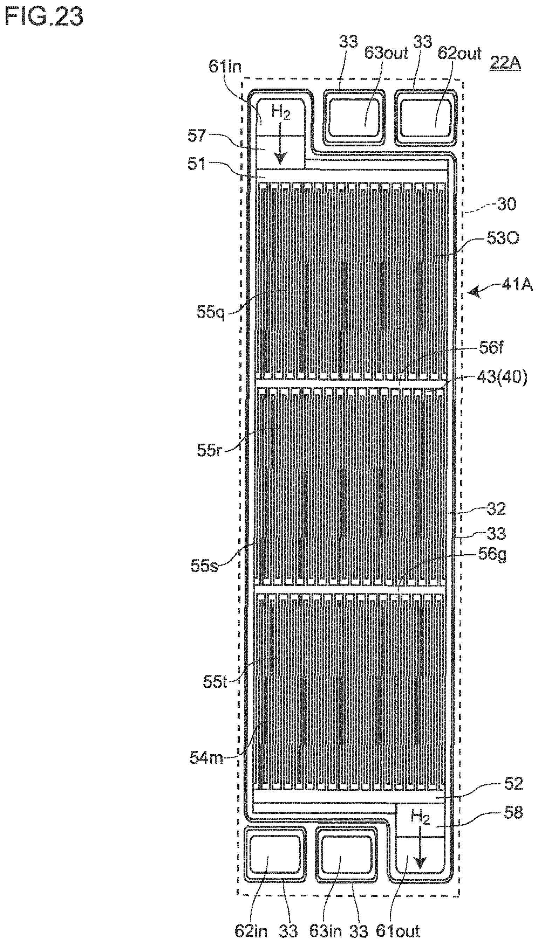

Fig. 23 is a plan view of a fuel cell separator 22A for an anode gas used in the test examples (the example 1, the example 2, and the comparison example). In the fuel cell gas supply diffusion layer for the anode gas used in the example 1, the example 2, and the comparison example, the fuel cell supply diffusion layer 41A described in the fuel cell separator 22A illustrated in fig. 23 was used. The shape of the gas flow path groove in the fuel cell gas supply diffusion layer 41A is basically substantially equal to the shape of the gas flow path groove in the fuel cell gas supply diffusion layer 42I in the comparison example, and the gas inflow side groove 53o, the gas outflow side groove 54m and the relay grooves 55q to 55s were formed. However, the direction that an anode gas flows and the direction that a cathode gas flows are opposite to each other in the unit cell and hence, in the fuel cell gas supply diffusion layer 41A, an upstream and a downstream of the gas flow path groove are exchanged. In the test example, only a difference in pattern of the gas flow path groove influences a result of the test in the test example (common constitutional elements being used in the example 1, the example 2, and the comparison example except for the gas flow path groove) and hence, the description of the constitutional elements other than a gas flow path groove is omitted.

In the respective test examples (test examples 1 to 3), as the power generation conditions, "a dry condition, no back pressure (power generation condition 1)", "a dry condition, a back pressure being present (a power generation condition 2)", and "a wet condition, no back pressure (a power generation condition 3)" were adopted by taking into account the use condition of the fuel cell. A temperature of a unit cell at the time of performing the test was set to 80C°. Air was used as a cathode gas, and a hydrogen gas was used as an anode gas. A cathode gas use ratio is set to 40%, and an anode gas use ratio is set to 70%. As a catalyst, a platinum catalyst (TEC10E50E made by Tanaka precious metals) was used, and a carrying amount of platinum catalyst on each of both poles was set to approximately 0.3mg/cm². As a polymer membrane, NAFION (registered trademark) NR211 having a thickness of 25µm was used. An effective area was set to 29.16 cm² (3cm × 9.72cm). A moisture of a cathode gas and an anode gas in "dry condition" was set to 30% RH, and a moisture of the cathode gas and the anode gas in "wet condition" was set to 80% RH. A back pressure in "no back pressure" means 0kPaG, that is, an atmospheric pressure. The back pressure in "back pressure being present" was set to 150kPaG, that is, a value obtained by adding 150kpa to an atmospheric pressure.

In the test examples 1 to 3, a fuel cell unit cell evaluation apparatus manufactured by Panasonic Production Engineering Company, Ltd. was used. Then, the measurement of "relationship between current density and voltage" in the test example 1, and the measurement of "relationship between current density and pressure of cathode gas" in the test example 2 were performed by measuring a voltage and a pressure of a cathode gas on an inflow side by gradually increasing current density by changing a current value of an electronic load device. During such measurement, a gas use ratio is set to a constant value by adjusting a supply amount of a reaction gasses (an anode gas and a cathode gas) inconformity with a current value.

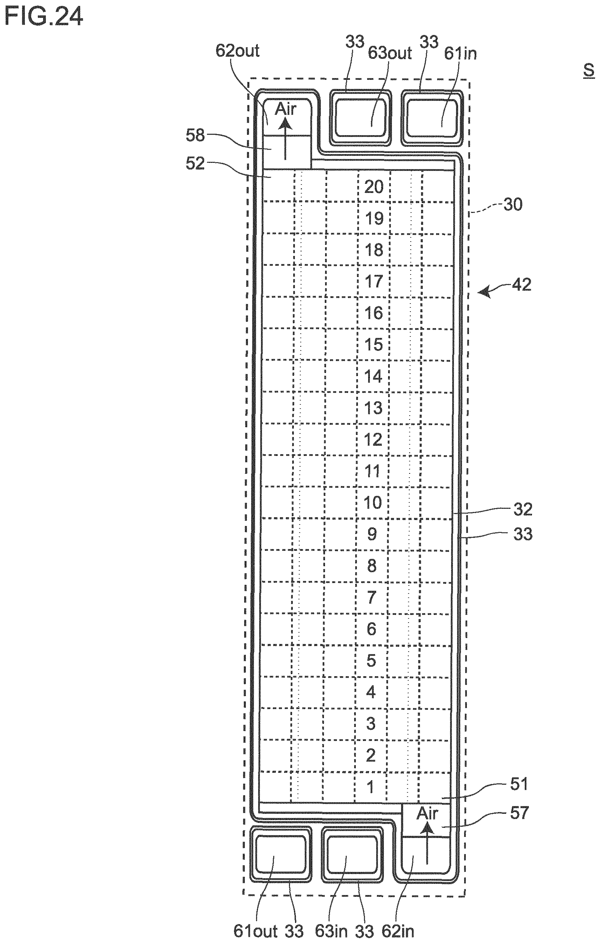

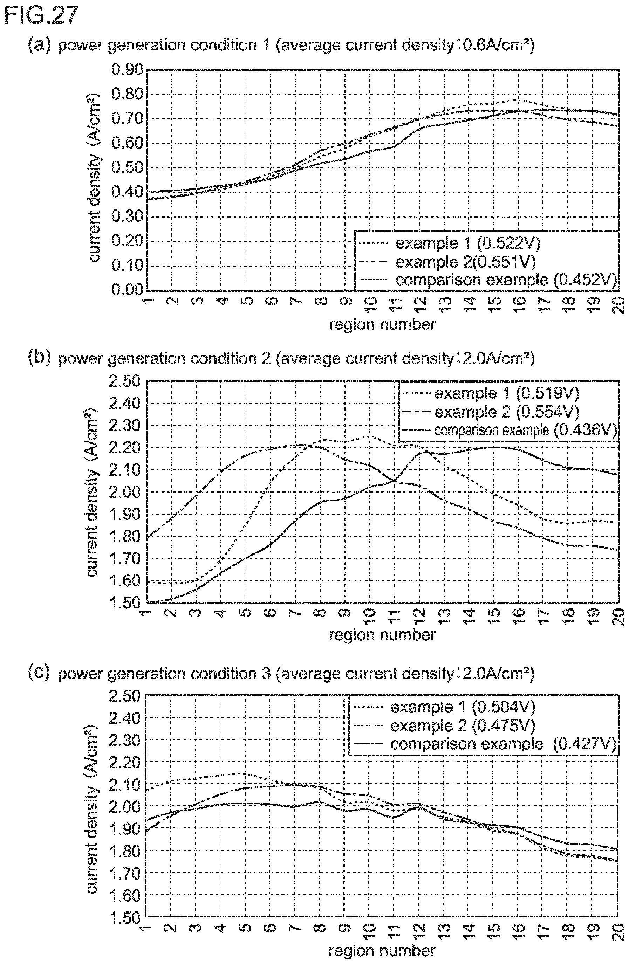

In the test example 3, a current density distribution sensor "Current scan lin" manufactured by S++ Inc. is also used. Then, the measurement of "current density distribution" in the test example 3 was performed such that a region where power is generated in a unit cell is divided into zones of 20 rows and 6 columns, and current density was measured for each zone. The measurement was performed under a condition that average current density becomes constant. Fig. 24 is a view for describing zones in the region at the time of measuring he current density distribution in the test example 3. A separator S illustrated in Fig. 24 is a separator having the configuration common among separators of a type C used in a unit cell (the description of gas flow path grooves being omitted). Numerals indicated in the third column counted from the right above a gas supply diffusion layer 42 are region numbers given to the divided regions from an inflow side to an outflow side of a gas. Numerals of the region numbers correspond to numerals on an axis of abscissas (the region numbers) in a graph illustrated in Fig. 27 described later.

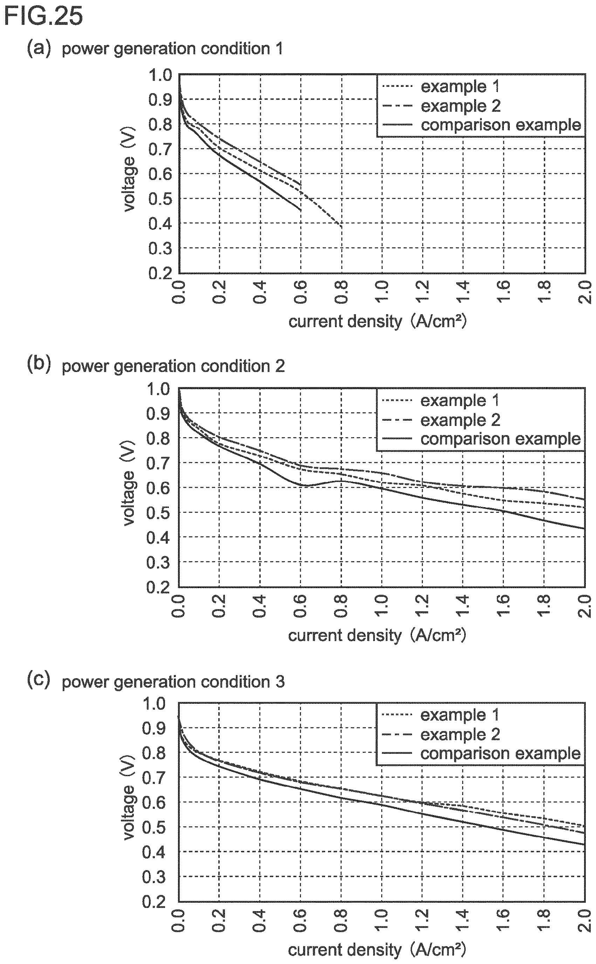

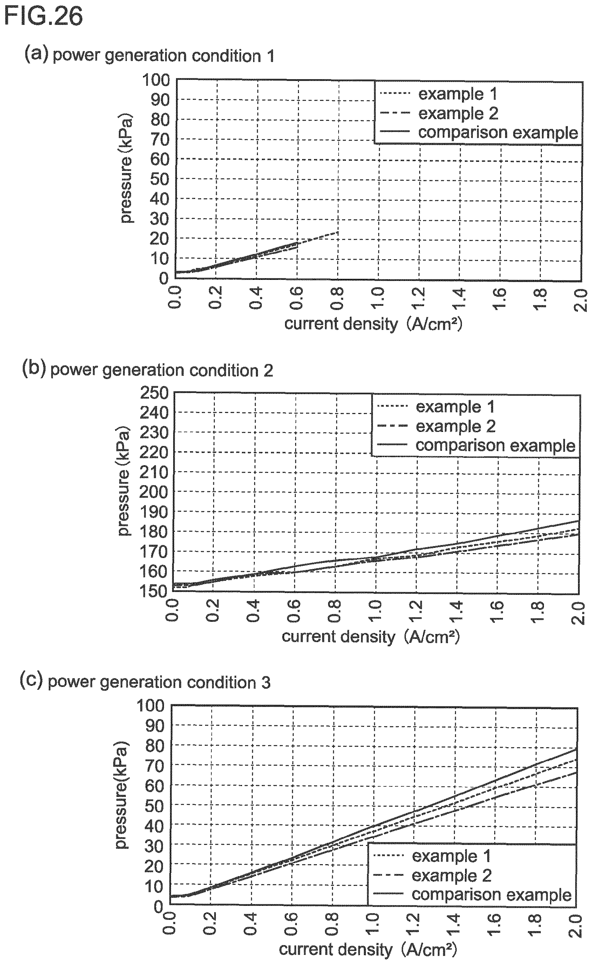

Next, results of the tests are described. Fig. 25 is a graph indicating the result of the test example 1 (the relationship between a pattern of gas flow path grooves and a power generation characteristic). That is, Fig. 25 is a graph that directly indicates the relationship between a current density and a voltage (so-called I-V performance) in the example 1, the example 2, and the comparison example. Fig. 26 is a graph indicating the result of the test example 2 (the relationship between a pattern of gas flow path grooves and a pressure loss in a fuel cell supply diffusion layer). That is, Fig. 26 is the graph that directly indicates the relationship between a current density and a pressure of a cathode gas in the example 1, the example 2, and the comparison example. Fig. 27 is a graph indicating the result of the test example 3 (the relationship between a pattern of gas flow path grooves and the current density distribution in the fuel cell supply diffusion layer). That is, Fig. 27 is a graph that directly indicates the current density distribution in the example 1, the example 2, and the comparison example. Fig. 25 (a), Fig. 26 (a), and Fig. 27 (a) are graphs indicating a power generation condition 1. Fig. 25 (b), Fig. 26(b), and Fig. 27 (b) are graphs indicating a power generation condition 2. Fig. 25 (c), Fig. 26(c), and Fig. 27(c) are graphs indicating a power generation condition 3. In Fig. 27 (a), Fig 27 (b), and Fig. 27(c), a value of "output voltage obtained when current of average current density is made to flow" is described behind letters in the example 1, the example 2, and the comparison example. Further, in the respective graphs, the result of the example 1 is described by a broken line, the result of the example 2 is described by a chained line, and the result of the comparison example is described by a solid line.

In the power generation condition 1, when current density was increased, the obtained voltage was sharply lowered and hence, a significant result was not obtained. Accordingly, as illustrated in Fig. 25 and Fig. 26, the measurement of the relationship between current density and a voltage was terminated at 0.6 to 0.8A/cm². Further, as a result, in Fig. 27, only with respect to the case of the power generation condition 1, the measurement of current density distribution was performed under the condition that the set average current density was 0.6A/cm².

### 1. Result of test example 1

As the result of the test example 1, it was found that also in cases where either one of power generation conditions is adopted, the example 1 and the example 2 acquire a higher voltage than the comparison example when the comparison is made at any current density and hence, power generation efficiency is increased (see Fig. 25).

### 2. Result of test example 2

As the result of the test example 2, it was found that also in the cases where either one of power generation conditions is adopted, a pressure loss in the fuel cell gas supply diffusion layer of a cathode gas generated when the same current density is obtained was low in the case of the test example 1 and the test example 2 compared to the comparison example (see Fig. 26).

These results means that the power generation efficiency can be increased in the example 1 and the example 2 compared to the case of the comparison example.

### 3. Result of test example 3

First, average current density (Jm)is a value obtained by dividing a sum of individual current densities (Ji)obtained in respective zones (i) including the regions 1 to 20 illustrated in Fig. 24 by an area of a total zone. In these zones, the smaller an activated overvoltage (Ea) determined based on effective use rate of a catalyst, the smaller a gas diffusion overvoltage (Ed) determined based on gas supply/discharge ability in a fuel cell gas supply diffusion layer, and the smaller a resistance overvoltage (Er) determined by conductivity of electrons and ions in an electrode, the larger an obtained current density value becomes. The relationship between a voltage (Ei) obtained relating to a certain zone and a theoretically obtainable battery voltage (Et) is obtained by an equation expressed by "Ei=Et-Ea-Ed-Er".

A catalyst layer and a fuel cell gas supply diffusion layer have electron conductivity and hence, a voltage (Ei) obtained relating to the individual zones exhibits the same value as a potential measured as the whole electrode ((E)substantially agreeing with a voltage (V) illustrated in Fig. 25)). Accordingly, if it is possible that the supply/discharge ability of a reaction gas can be improved by applying a pattern of gas flow path grooves in the fuel cell gas supply diffusion layer according to the present invention, it is expected that an activated overvoltage (Ea) and a gas diffusion overvoltage (Ed) are reduced. Further, if discharging of reaction product water at a local area/ the uniform distribution of a voltage in an electrode can be realized, it is expected that a resistance overvoltage (Er) is reduced and hence, a voltage (Ei) obtained relating to individual zones and a potential (E) measured as the whole electrode are increased.

First, in the power generation condition 1, "dry condition, no back pressure" (see Fig. 27(a)), a battery output at 0.6A/cm² is 0.522×0.6W/cm² in the example 1, and the battery output at 0.6A/cm² is 0.551×0.6W/cm² in the example 2. These values are apparently high compared to 0.452×0.6W/cm² of the comparison example. It was found that, even in such a condition, on a gas inflow side (region numbers 1 to 7) in all cases, the substantially the same low current density is only obtained. It is considered that such a state is brought about by a phenomenon that, with the use of a gas in a dry condition, a porous body layer (particularly the porous body layer in regions on a gas inflow side) is excessively dried. However, in the example 1 and the example 2, reaction product water effectively adds moisture to intermediate regions (region numbers 7 to 16) and hence, high current density is obtained compared to the comparison example whereby the high battery output described above is acquired. It is determined that the above-mentioned advantageous effects are brought about by the following reason. The supply/discharge ability of a reaction gas can be improved by the pattern of the gas flow path grooves according to the present invention and hence, an activated overvoltage (Ea) and a gas diffusion overvoltage (Ed)are reduced, and as a result of the discharge of reaction product water and a uniform distribution of the voltage in the electrode, a resistance overvoltage (Er) is reduced thus leading to the increase of a voltage (Ei) obtained relating to the individual zones and the increase of a potential (E) measured as a whole electrode.

Next, also in the power generation condition 2 "dry condition back pressure being present (see Fig. 27(b)), a battery output at 2.0A/cm² was 0.519×2W/cm² in the example 1, and 0.554×2W/cm² in the example 2. Accordingly, the battery outputs of the examples 1 and 2 were higher than a battery voltage of 0.436×2W/cm² of the comparison example. In the power generation condition 2, the increase of an output of the battery power can be realized more than any results in the power generation condition 1. This is because that a power generation amount itself can be increased by an effect acquired by applying a back pressure and, at the same time, an amount of moisture generated by the power generation can be increased and hence, drying of the porous body layer can be suppressed whereby the battery output can be increased. Further, with respect to current density distributions of the example 1 and the example 2 in the power generation condition 2, compared to the current density distribution of the comparison example in the power generation condition 2 and the current density distributions of the example 1, the example 2, and the comparison example in the power generation condition 1, the power generation region is apparently shifted through the gas input side (region numbers 1 to 10). It is considered that, in case of the example 1 and the example 2, particularly due to an action of the gas inflow side grooves having a relatively short length, an amount of moisture generated by the power generation in the regions in the gas inflow side is increased and hence, drying of the porous body layer in the region is further suppressed whereby an activated overvoltage (Ea) and a gas diffusion overvoltage (Ed) are reduced thus allowing the electrode to obtain the higher battery output as a whole.

Next, also in the power generation condition 3 "wet condition, no back pressure" (see Fig. 27(c)), it was found that the battery output can be increased compared to the case of the power generation condition 1 in the case of any one of the example 1, the example 2, and the comparison example. It was found that such a result was brought about by a phenomenon that drying of the porous body layer on the gas inflow side (region numbers 1 to 10) is suppressed by an effect of adopting the wet condition and hence, current densities in these regions are increased whereby the battery output is increased. Compared to the comparison example, in the example 1 and the example 2, due to a pattern of the gas flow path grooves, an effect of the supply of the gas supply and the humidification to the entire surface of the electrode is expanded and hence, potentials (Ei)of the respective zones are improved whereby the electrode potential (E) is increased thus enhancing the battery output.

### [Modifications 1 to 4]

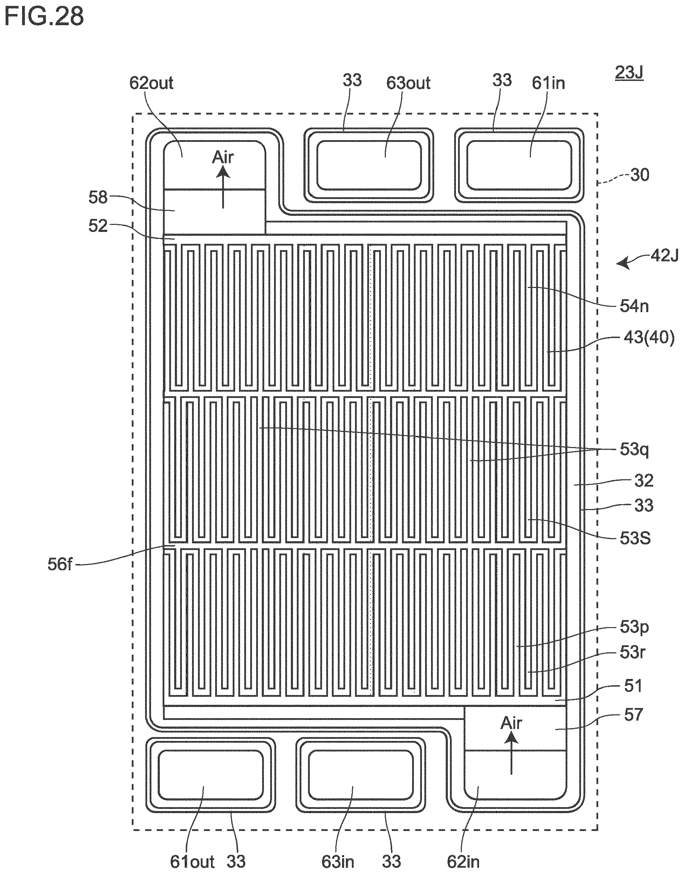

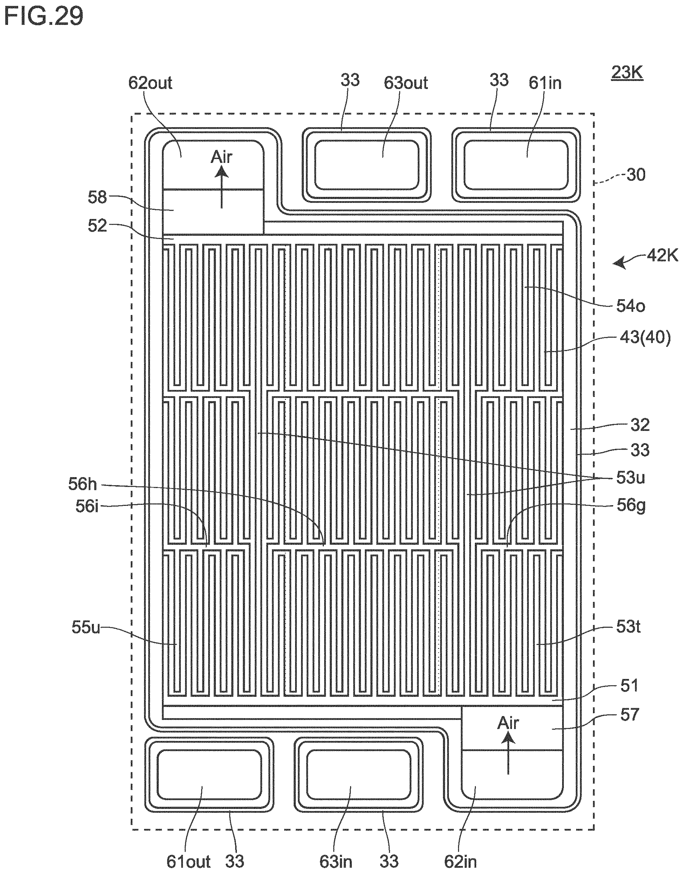

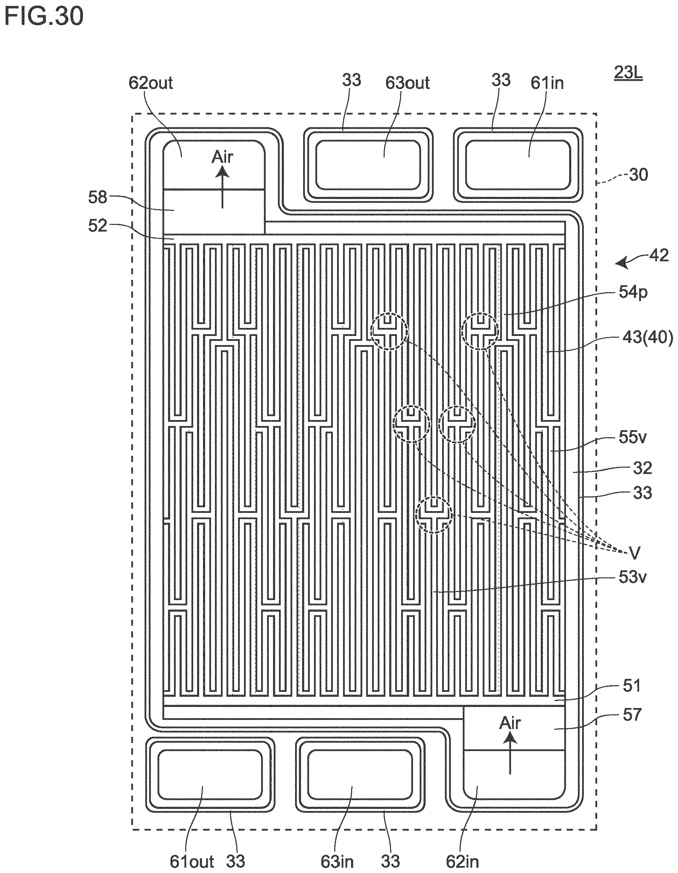

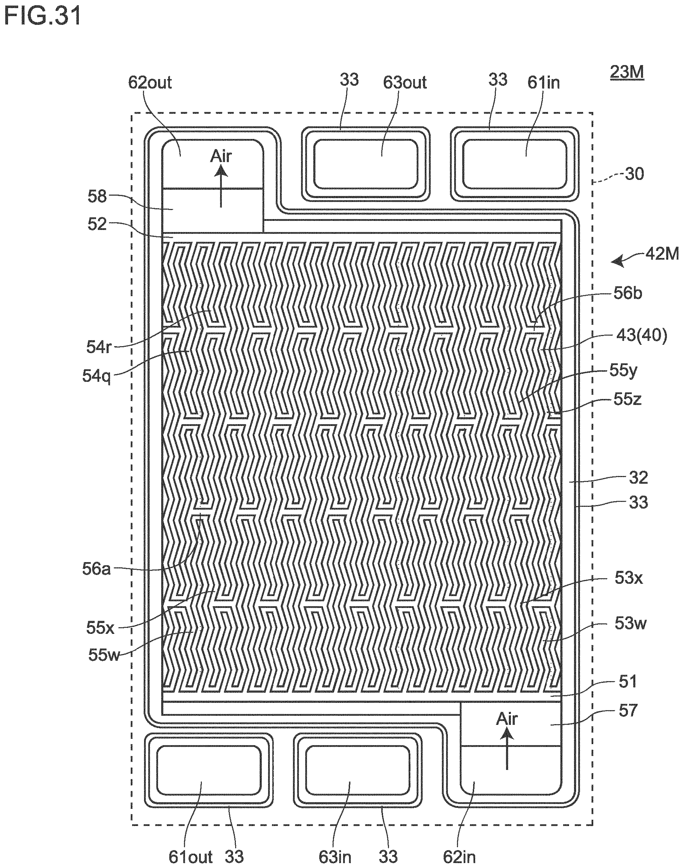

The patterns of the plurality of gas flow path grooves according to the present invention are not limited to the patterns described in the above-mentioned respective embodiments. Fig. 28 is a plan view of a fuel cell separator 23J according to a modification 1. Fig. 29 is a plan view of a fuel cell separator 23K according to a modification 2. Fig. 30 is a plan view of a fuel cell separator 23L according to a modification 3. Fig. 31 is a plan view of a fuel cell separator 23M according to a modification 4.

In a fuel cell gas supply diffusion layer 42J of the fuel cell separator 23J according to the modification 1, two more kinds of (two kinds in this case) gas inflow side grooves 53p, 53q having different lengths are formed. Among these gas inflow side grooves, two long gas inflow side grooves 53q communicate with communication grooves 56f formed over the entire fuel cell gas supply diffusion layer 42J in the x direction (see Fig. 28). The communication grooves 56f communicate with additional grooves 53r, 53s that are formed along the direction of the flow of a gas. In the fuel cell gas supply diffusion layer 42J according to the modification 1, all gas outflow side grooves 54m have the same length. However, the present invention is not limited to such a configuration. The fuel cell gas supply diffusion layer 42J according to the modification 1 may include gas outflow side grooves having a length different from the length of the gas outflow side groove 54m.

In a fuel cell gas supply diffusion layer 42K of the fuel cell separator 23K according to the modification 2, two more kinds of (two kinds in this case) gas inflow side grooves 53t, 53u having different lengths are formed. Among these gas inflow side grooves, two long gas inflow side grooves 53u are formed so as to divide the fuel cell gas supply diffusion layer 42K into three regions (see Fig. 29). Relay grooves such as relay grooves 55u communicate with communication grooves such as communication grooves 56g to 56i that are formed in the respective regions divided by the gas inflow side grooves 53u. In the fuel cell gas supply diffusion layer 42K according to the modification 2, all gas outflow side grooves 54n have the same length. However, the fuel cell gas supply diffusion layer 42K may have gas outflow side grooves that have a length different from the length of the gas outflow side grooves 54n.

In a fuel cell gas supply diffusion layer 42L of a fuel cell separator 23L according to the modification 3, not only the grooves having different lengths are formed, but also grooves that are branched or merged in multiple stages such as gas inflow side grooves 53v, gas outflow side grooves 54o and relay grooves 55v are formed (see Fig. 30). In Fig. 30, as an example of branching and merging in multiple stages, portions where the gas inflow side grooves 53v are branched are spotlighted by surrounding such places by a broken line indicated by V

In a fuel cell gas supply diffusion layer 42M of a fuel cell separator 23M according to the modification 4, a basic pattern of a plurality of gas flow path grooves is substantially equal to the fuel cell gas supply diffusion layer 42A of the fuel cell separator 23A according to the embodiment 1. However, gas inflow grooves 53w, the gas inflow grooves 53x, gas outlet grooves 54q, 54r and relay grooves 55x to 55z are formed in a zigzag shape respectively. In the present invention, the gas flow path grooves may be formed in a wave shape or an arcuate shape. Further, in the present invention, the gas flow path groove may have a shape where a width of the gas flow path groove changes. That is, in the present invention, the gas flow path grooves may be formed in shapes other than a straight-line shape. In this manner, the pattern of the gas flow path grooves in the present invention can be formed in a desired shape corresponding to the individual circumstances provided that advantageous effects of the present invention are not impaired.

### [Modification 5]

In the above-mentioned respective embodiments, as a membrane electrode assembly, the membrane electrode assembly 81 that includes the catalyst layer 85 having substantially the same area as the fuel cell gas supply diffusion layer is used. However, the present invention is not limited to such a configuration. As the membrane electrode assembly, a membrane electrode assembly that includes a catalyst layer 85 having a smaller area than the fuel cell gas supply diffusion layer may be used.

### [Modification 6]

In the above-mentioned respective embodiments, as the gas outlet groove, the gas flow path groove where a width of the gas flow path groove on a surface of the porous body layer 40 (or the gas flow path groove) and a width of the gas flow path groove at a bottom of the gas flow path groove are equal, and the gas flow path groove has a rectangular shape in cross section is used (see Fig. 5 and Fig. 8). However, the present invention is not limited to such a configuration. The gas flow path groove may be a gas flow path groove having a triangular cross section where a bottom of the groove is narrower than the width of the groove on the surface of the porous body layer 40, or may be a gas flow path groove having a semi-circular cross section where a bottom of the groove is narrower than the width of the groove on the surface of the porous body layer 40, or may be a gas flow path groove having any other shape.

### [Modification 7]

In the above-mentioned respective embodiments, as the gas diffusion layer, the fuel cell gas supply diffusion layer that includes the porous body layer 40 having one surface on which the gas flow path grooves are formed is used (see Fig. 4). However, the present invention is not limited to such a configuration. For example, it is possible to use a fuel cell gas supply diffusion layer that includes: a porous body layer 40 having one surface on which gas flow path grooves are formed; and a microporous layer that is disposed on the other surface of the porous body layer 40. In the case where the fuel cell gas supply diffusion layer adopts such a configuration, a separator can be formed using a membrane electrode assembly that does not include a microporous layer.

### [Modification 8]

In the above-mentioned respective embodiments, the metal plate 30 is used as the gas shield plate. However, the present invention is not limited to such a confirmation. Besides the metal plate 30, a plate made of a material having property of shielding a gas (for example, a conductive composite material plate that is formed of conductive fine particles and a resin, or a ceramic plate or a resin plate combined with a current collector sheet) can be used.

The technical features described in the respective modifications are applicable to all of the gas diffusion layer, the separator and the electrochemical reactor according to the present invention. For example, the technical features described in the respective modifications are applicable to the fuel cell separator 21 of a type CA, the fuel cell separator 24 of a type CW, the fuel cell separator 22 of a type A, the fuel cell separator 25 of a type AW, a fuel cell separator and a fuel cell stack provided with such fuel cell gas supply diffusion layer.

### [Modification 9]

The diffusion layer, the separator, and electrochemical reactor according to the present invention can be used for an electrolysis.

The gas diffusion layer, the separator, and electrochemical reactor according to the present invention have been described heretofore based on the embodiments illustrated in the drawings. However, the present invention is not limited to the above-mentioned respective embodiments, and various modifications can be carried out without departing from the gist of the present invention.

### Reference Signs List

20: fuel cell stack
21,22,22A,23Ato 23L, 24, 25: fuel cell separator
27A, 27B: current collector
28A, 28B: insulation sheet
30: metal plate
32: dense frame
33: gasket
40: porous body layer
41,41A,42,42A to 42L: fuel cell gas supply diffusion layer
43: gas diffusion layer
51: gas inflow side stepped portion
52: gas outflow side stepped portion
53: gas flow path groove
53a to 53q, 53t to 53x: gas inflow side groove
53r, 53s: additional grooves
54a to 54q: gas outflow side groove
55a to 55z: relay groove
56a to 56i: communication groove
57: inflow path
58: outflow path
61in: anode gas inlet port
61out: anode gas outlet port
62in: cathode gas inlet port
62out: cathode gas outlet port
63in: cooling water inlet port
63out: cooling water outlet port
71in: anode gas supply port
71out: anode gas discharge port
72in: cathode gas supply port
72out: cathode gas discharge port
73in: cooling water supply port
73out: cooling water discharge port
75, 76: end plate
81: membrane electrode assembly
81A: frame
82: electrolytic membrane
83: microporous layer
85: catalyst layer

## Claims

1. A gas diffusion layer comprising:
a sheet-shaped porous body layer having conductivity, the porous body layer allowing permeation and diffusion of a gas therethrough; and
a plurality of gas flow path grooves formed on one surface of the porous body layer in a direction directed from a gas inflow side to a gas outflow side, wherein
the plurality of gas flow path grooves include: a plurality of gas inflow side grooves formed on the gas inflow side; and a plurality of gas outflow side grooves formed on the gas outflow side, and
the plurality of gas inflow side grooves include two or more kinds of gas inflow side grooves that have different lengths.

2. The gas diffusion layer according to claim 1, wherein among the four gas inflow side grooves disposed adjacently to each other, at least one gas inflow side groove differs from other gas inflow side grooves in length.

3. The gas diffusion layer according to claim 2, wherein the two gas inflow side grooves disposed adjacently to each other have different lengths.

4. The gas diffusion layer according to any one of claims 1 to 3, wherein among the plurality of gas inflow side grooves, the gas inflow side groove having a shortest length has a length that is less than 30% of a length of the porous body layer from a gas inflow side to a gas outflow side, and among the plurality of gas inflow side grooves, the gas inflow side groove having a longest length has a length that is 40% or more of the length of the porous body layer from the gas inflow side to the gas outflow side.

5. The gas diffusion layer according to any one of claims 1 to 4, wherein, the plurality of gas outflow side grooves include two or more kinds of gas outflow side grooves having different lengths.

6. The gas diffusion layer according to claim 5, wherein among the four gas outflow side grooves disposed adjacently to each other, at least one gas outflow side groove has a length different from lengths of other gas outflow side grooves.

7. The gas diffusion layer according to claim 6, wherein the two gas outflow side grooves disposed adjacently to each other have different lengths.

8. The gas diffusion layer according to any one of claims 1 to 7, wherein among the plurality of gas inflow side grooves, the gas inflow side groove having a shortest length has a length that is less than 30% of a length of the porous body layer from a gas inflow side to a gas outflow side, and among the plurality of gas outflow side grooves, the gas outflow side groove having a longest length has a length that is 30% or more of the length of the porous body layer from the gas inflow side to the gas outflow side.

9. The gas diffusion layer according to any one of claims 1 to 8, wherein the plurality of gas flow path grooves include a plurality of relay grooves formed between the gas inflow side grooves and the gas outflow side grooves in addition to the plurality of gas inflow side grooves and the plurality of gas outflow side grooves.

10. The gas diffusion layer according to claim 9, wherein the plurality of relay grooves communicate with each other in a direction perpendicular to a direction directed from the gas inflow side to the gas outflow side.

11. The gas diffusion layer according to claim 9, wherein the gas diffusion layer includes, as the plurality of relay grooves, a plurality of relay grooves where a pair of relay grooves that is formed such that two relay grooves disposed adjacently to each other communicate with each other are formed along a direction perpendicular to a direction directed from the gas inflow side to the gas outflow side.

12. The gas diffusion layer according to any one of claims 9 to 11, wherein the plurality of gas inflow side grooves, the plurality of gas outflow side grooves, and the plurality of relay grooves are formed to be interposed therebetween.

13. The gas diffusion layer according to any one of claims 1 to 12, wherein all of or some of the plurality of gas flow path grooves have "a branching portion from one groove to two grooves" or "a merging portion from two grooves to one groove".

14. The gas diffusion layer according to any one of claims 1 to 13, wherein in a plan view of the gas diffusion layer, a rate of an area of the gas flow path groove forming region with respect to a total area of the porous body layer falls within a range of 30% to 80%.

15. The gas diffusion layer according to any one of claims 1 to 14, wherein the gas diffusion layer is a fuel cell gas supply diffusion layer.

16. The gas diffusion layer according to claim 15, wherein the gas diffusion layer is a fuel cell gas supply diffusion layer for a cathode gas.

17. A separator comprising:
a gas shield plate; and
a gas diffusion layer that is disposed on at least one surface of the gas shield plate, wherein
the gas diffusion layer is the gas diffusion layer according to any one of claims 1 to 16, and the plurality of gas flow path grooves are disposed with respect to the gas shield plate such that the plurality of gas flow path grooves are positioned on the gas shield plate side, and
a gas flow path is formed of the gas flow path grooves and the gas shield plate.

18. An electrochemical reactor formed by stacking a separator and a membrane electrode assembly to each other, wherein
the separator is the separator according to claim 17, and
the separator and the membrane electrode assembly are stacked to each other in a positional relationship where the membrane electrode assembly is positioned on a surface of the gas diffusion layer where the plurality of gas flow path grooves are not formed.

19. The electrochemical reactor according to claim 18, wherein
the electrochemical reactor is a fuel cell stack.
